# EUROPEAN PATENT APPLICATION

(11) **EP 0 945 458 A2**
(43) Date of publication of application: **29.09.1999**
(21) Application number: 99103528.8
(22) Date of filing: 24.02.1999
(51) Int. Cl.: C07F 17/00, C08F 4/64, C08F 12/08

(54) **Transition metal compound, polymerization catalyst comprising it, and method for producing polymers using the polymerization catalyst**

(30) Priority: 26.03.1998 JP 7868398; 26.03.1998 JP 7868498
(71) Applicant: IDEMITSU PETROCHEMICAL CO., LTD., Tokyo 108-0014 (JP)
(72) Inventor: Aoyama, Yoshiaki, Ichihara-shi, Chiba 299-0107 (JP); Ikeuchi, Satoshi, Ichihara-shi, Chiba 299-0107 (JP); Yokota, Kiyohiko, Ichihara-shi, Chiba 299-0107 (JP); Ito, Kazuhiko, Ichihara-shi, Chiba 299-0107 (JP); Inoue, Tetsuya, Ichihara-shi, Chiba 299-0107 (JP)
(74) Representative: Türk, Gille, Hrabal

(57) **Abstract**

Provided are transition metal compounds (A) and (A'):

RMXₐ₋₁L_{b} (A)

R'M'Xₐ₋₁L_{b} (A')

R and R' each are a specific p ligand; M and M' each are a transition metal; X is a s ligand; L is a Lewis base; a is the valency of M or M'; b is 0, 1 or 2. A catalyst comprising (A) or (A'), and (B) at least one selected from (a) an oxygen-containing compound, (b) a compound capable of reacting with the transition metal compound to form an ionic complex, and (c) clay, a clay mineral or an ion-exchanging phyllo-structured compound, and optionally (C) an alkylating agent is used for polymerizing ethylenic unsaturated bond-having compounds, especially for polymerizing styrenic monomers to give styrenic polymers with high syndiotacticity.

## Description

### BACKGROUND OF THE INVENTION

### 1. Field of the Invention:

The present invention relates to a transition metal compound useful as a component for polymerization catalysts for ethylenic unsaturated bond-having compounds, in particular, for styrenic compounds, to a polymerization catalyst comprising the compound, and to a method for producing polymers with the catalyst.

### 2. Description of the Related Art:

It is known that olefinic polymers such as polyethylenes and polypropylenes are produced in the presence of a catalyst system that contains a Ziegler-Natta catalyst as the principal catalytic component. Recently, various attempts have been made to produce olefinic polymers with a polymerization catalyst that comprises, as the catalytic component, a transition metal compound having a π ligand in which the π ligand is bonded to a central metallic element via any other group existing therebetween. The polymerization catalyst of that type is generally referred to as a metallocene catalyst in the art. Various types of such catalysts have been proposed, which comprise a transition metal compound having, as the π ligand, an aromatic ring-containing, condensed polycyclic cyclopentadienyl group such as an indenyl or fluorenyl group. For example, styrenic polymers with a syndiotactic configuration are produced, using a catalyst system that comprises a transition metal compound having, as the π ligand, an indenyl group, and an aluminoxane (see JP-A-1-294705); and known are transition metal compounds with a specific configuration having, as the π ligand, a condensed polycyclic cyclopentadienyl group in which at least one poly-membered ring condensed with the cyclopentadienyl group is a saturated ring (see JP-A-7-247307).

At present, however, the catalysts concretely disclosed in such publications could not still have satisfactory activity.

### SUMMARY OF THE INVENTION

In that situation, the object of the invention is to provide (i) a novel transition metal compound useful as a component for polymeriZation catalysts for ethylenic unsaturated bond-having compounds, (ii) a polymerization catalyst with high activity for ethylenic unsaturated bond-having compounds, which comprises the compound, and (iii) an inexpensive and efficient method for producing polymers of ethylenic unsaturated bond-having compounds, especially styrenic polymers with high syndiotacticity, in which is used the polymerization catalyst.

We, the present inventors have assiduously studied so as to attain the object noted above, and, as a result, have found that (i) a transition metal compound having a specific substituted indenyl group, substituted fluorenyl group or substituted cyclopentadienyl group is useful as a component for polymerization catalysts for ethylenic unsaturated bond-having compounds, especially for styrenic compounds, (ii) a polymerization catalyst comprising the transition metal compound, and (a) an oxygen-containing compound and/or (b) a compound capable of reacting with the transition metal compound to form an ionic complex and/or (c) clay, a clay mineral or an ion-exchanging phyllo-structured compound, and optionally an alkylating agent is highly active for efficiently catalyzing the polymerization of ethylenic unsaturated bond-having compounds, and, in particular, (iii) polymerizing styrenic compounds in the presence of the polymerization catalyst gives styrenic polymers with high syndiotacticity, for which the cost is low and the efficiency is high.

Specifically, the invention herein provides the following:
(1) A transition metal compound of a general formula (I):

   RMXₐ₋₁L_{b} (I)

   wherein R represents a π ligand, and this is a substituted indenyl or fluorenyl group in which at least one substituent is an alkyl group having at least 2 carbon atoms, or is a substituted, condensed polycyclic cyclopentadienyl group in which at least one substituent is an alkyl group having at least 2 carbon atoms and at least one poly-membered ring condensed with the substituted cyclopentadienyl group is a saturated ring;
   M represents a transition metal;
   X represents a σ ligand, and plural X's may be the same or different, and may be bonded to each other via any group therebetween;
   L represents a Lewis base, and plural L's, if any, may be the same or different;
   a represents the valency of M; and
   b represents 0, 1 or 2.
(2) A transition metal compound of a general formula (I):

   RMXₐ₋₁L_{b} (I)

   wherein R represents a π ligand, and this is a substituted indenyl or fluorenyl group in which at least one substituent is an alkyl group having at least 2 carbon atoms;
   M represents a transition metal;
   X represents a σ ligand, and plural X's may be the same or different, and may be bonded to each other via any group therebetween;
   L represents a Lewis base, and plural L's, if any, may be the same or different;
   a represents the valency of M; and
   b represents 0, 1 or 2.
(3) A polymerization catalyst for ethylenic unsaturated bond-having compounds, which comprises (A) a transition metal compound of (1) or (2), and (B) at least one component selected from the following (a), (b) and (c):
   (a) an oxygen-containing compound,
   (b) a compound capable of reacting with the transition metal compound to form an ionic complex, and
   (c) clay, a clay mineral or an ion-exchanging phyllo-structured compound.
(4) A polymerization catalyst for ethylenic unsaturated bond-having compounds, which comprises (A) a transition metal compound of (1) or (2), (B) at least one component selected from the following (a), (b) and (c), and (C) an alkylating agent:
   (a) an oxygen-containing compound,
   (b) a compound capable of reacting with the transition metal compound to form an ionic complex, and
   (c) clay, a clay mineral or an ion-exchanging phyllo-structured compound.
(5) A polymerization catalyst for styrenic polymers, which comprises (A) a transition metal compound of (1) or (2), and (B) at least one component selected from the following (a) and (b):
   (a) an oxygen-containing compound, and
   (b) a compound capable of reacting with the transition metal compound to form an ionic complex.
(6) A polymerization catalyst for styrenic polymers, which comprises (A) a transition metal compound of (1) or (2), (B) at least one component selected from the following (a) and (b), and (C) an alkylating agent:
   (a) an oxygen-containing compound, and
   (b) a compound capable of reacting with the transition metal compound to form an ionic complex.
(7) The polymerization catalyst of any one of (3) to (6), wherein R in formula (I) for the transition metal compound of (1) or (2) is any of the following general formulae (II) to (VII): 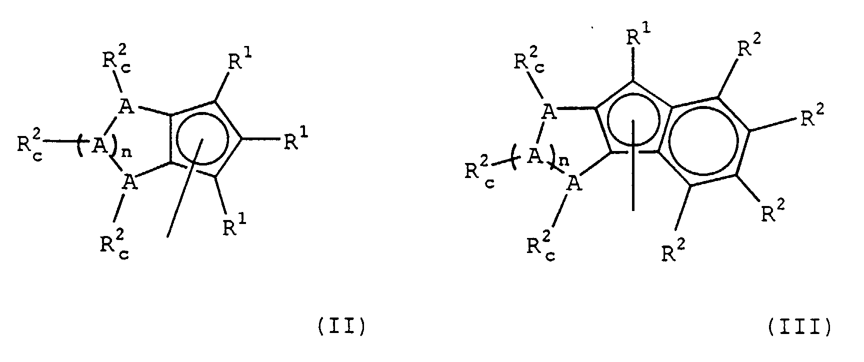 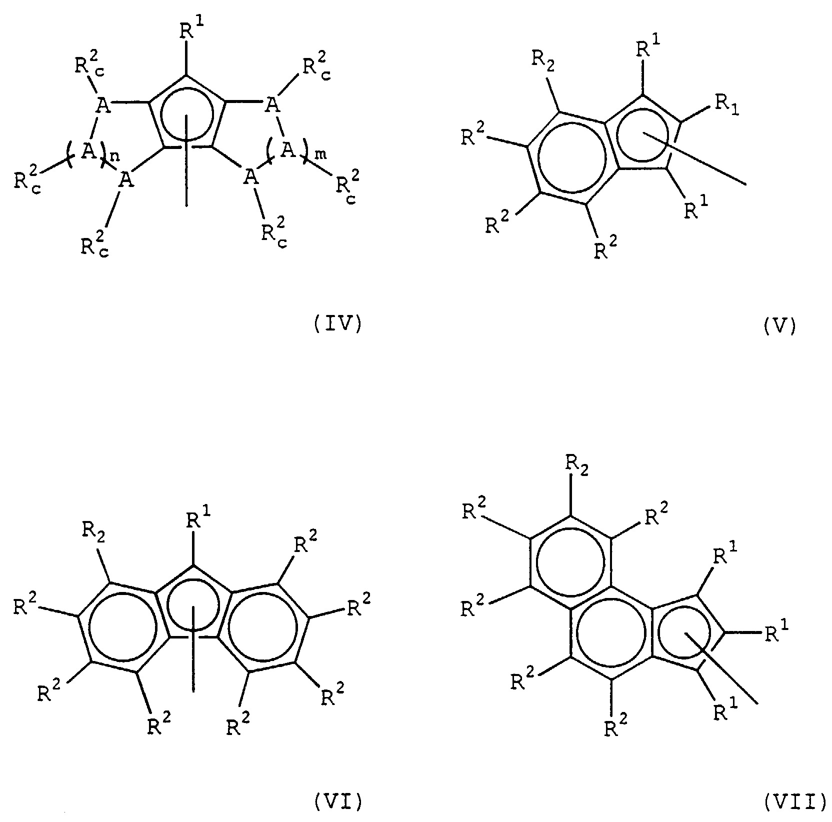
   where A represents an element of Group 13, 14, 15 or 16, and plural A's may be the same or different;
   R¹ and R² each represent a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, a carboxyl group, or an alkylsilyl or alkylsilylalkyl group having from 3 to 30 carbon atoms, and R¹ and R² may be the same or different, and may be bonded to each other to form a cyclic structure, but at least one R¹ is an alkyl group having at least 2 carbon atoms;
   c represents 1 or 2; and
   n and m each represent an integer of 1 or more.
(8) The polymerization catalyst of any one of (3) to (6), wherein R in formula (I) for the transition metal compound of (1) or (2) is any of 4,5,6,7-tetrahydroindenyl groups.
(9) The polymerization catalyst of any one of (3) to (6), wherein R in formula (I) for the transition metal compound of (1) or (2) is selected from a 1-ethyl-4,5,6,7-tetrahydroindenyl group, a 1-ethyl-2-methyl-4,5,6,7-tetrahydroindenyl group and a 2-ethyl-4,5,6,7-tetrahydroindenyl group.
(10) A method for producing polymers of ethylenic unsaturated bond-having compounds, in which is used the polymerization catalyst of anyone of (3),(4),(7),(8), and (9).
(11) A method for producing styrenic polymers, which comprises polymerizing styrenic compounds, or styrenic compounds and other polymerizable unsaturated compounds, with using the polymerization catalyst of any one of (5) to (9).
(12) The method for producing styrenic polymers of (10), wherein the styrenic polymers produced have high syndiotacticity.
(13) A transition metal compound of a general formula (VIII):

   R'M'Xₐ₋₁L_{b} (VIII)

   wherein R' represents a substituted cyclopentadienyl group, a substituted indenyl group, or a substituted fluorenyl group, which has at least one substituent R³ of the following general formula (IX) and in which the other substituents R⁴'s are any of a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, a carboxyl group and an alkylsilyl group having from 3 to 30 carbon atoms, and plural R⁴'s may be the same or different; and, irrespective of R³ and R⁴, the substituents on R' may be bonded to each other to form a cyclic compound;
   M' represents a transition metal of Group 4 to Group 10;
   X represents a σ ligand, and plural X's may be the same or different, and may be bonded to each other via any group therebetween;
   L represents a Lewis base, and plural L's, if any, may be the same or different;
   a represents the valency of M; and
   b represents 0, 1 or 2, 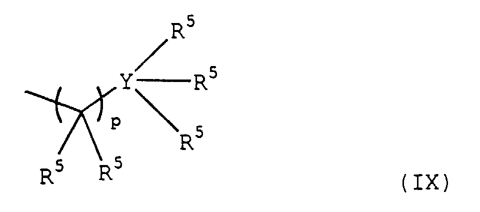
      where Y represents a silicon atom, a germanium atom, or a tin atom;
      p represents an integer of 1 or more;
      R⁵ represents a hydrogen atom, a halogen atom, analiphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, a carboxyl group, or an alkylsilyl group having from 3 to 30 carbon atoms, and plural R⁵'s may be the same or different.
(14) A polymerization catalyst for ethylenic unsaturated bond-having compounds, which comprises (A') at least one transition metal compound of (13), and (B) at least one component selected from the following (a), (b) and (c), and optionally (C) an alkylating agent:
   (a) an oxygen-containing compound,
   (b) a compound capable of reacting with the transition metal compound to form an ionic complex, and
   (c) clay, a clay mineral or an ion-exchanging phyllo-structured compound.
(15) A polymerization catalyst for styrenic polymers, which comprises (A') at least one transition metal compound of (13), and (B) at least one component selected from the following (a) and (b), and optionally (C) an alkylating agent:
   (a) an oxygen-containing compound, and
   (b) a compound capable of reacting with the transition metal compound to form an ionic complex.
(16) The polymerization catalyst of (13), wherein R' in the transition metal compound (A') is a group of a general formula (X): 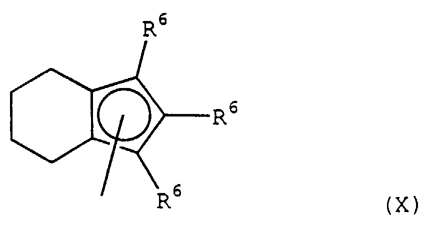 wherein at least one R⁶ is an alkylsilylalkyl group having a structure of the following general formula (XI), and the other R⁶'s are any of a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, a carboxyl group and an alkylsilyl group having from 3 to 30 carbon atoms, and plural R⁶'s may be the same or different, 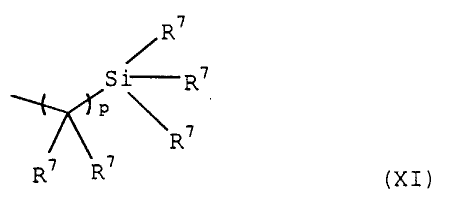
   where p represents an integer of 1 or more;
   R⁷ represents a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, a carboxyl group, or an alkylsilyl group having from 3 to 30 carbon atoms, and plural R⁷'s may be the same or different.
(17) The polymerization catalyst of (13), wherein R' in the transition metal compound (A') is a group of a general formula (XII): 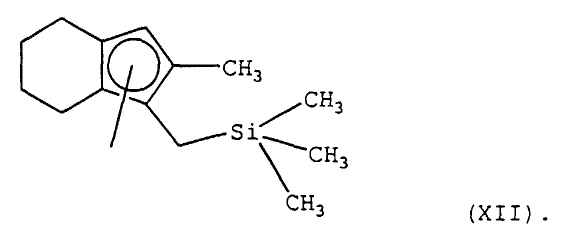
(18) A method for producing polymers of ethylenic unsaturated bond-having compounds, in which is used the polymerization catalyst of any one of (14), (16) or (17).
(19) A method for producing styrenic polymers, which comprises polymerizing styrenic compounds, or styrenic compounds and other polymerizable unsaturated compounds, with using the polymerization catalyst of any one of (15) to (17).
(20) The method for producing styrenic polymers of (19), wherein the styrenic polymers produced have high syndiotacticity.

### DETAILED DESCRIPTION OF PREFERRED EMBODIMENTS

Embodiments of the invention are described in detail hereinunder.

### 1. Transition Metal Compound:

The transition metal compound of the invention is mentioned below.
(1) A transition metal compound of a general formula (I):

   RMXₐ₋₁L_{b} (I)

   wherein R represents a π ligand, and this is a substituted indenyl or fluorenyl group in which at least one substituent is an alkyl group having at least 2 carbon atoms, or is a substituted, condensed polycyclic cyclopentadienyl group in which at least one substituent is an alkyl group having at least 2 carbon atoms and at least one poly-membered ring condensed with the substituted cyclopentadienyl group is a saturated ring;
   M represents a transition metal;
   X represents a a ligand, and plural X's may be the same or different, and may be bonded to each other via any group therebetween;
   L represents a Lewis base, and plural L's, if any, may be the same or different;
   a represents the valency of M; and
   b represents 0, 1 or 2.
(2) As the transition metal compound to be the component (A) in the polymerization catalyst, which is mentioned hereinunder, preferred are the following:
   [i] Transition metal compounds of formula (I) in which R is any of the following general formulae (II) to (VII): 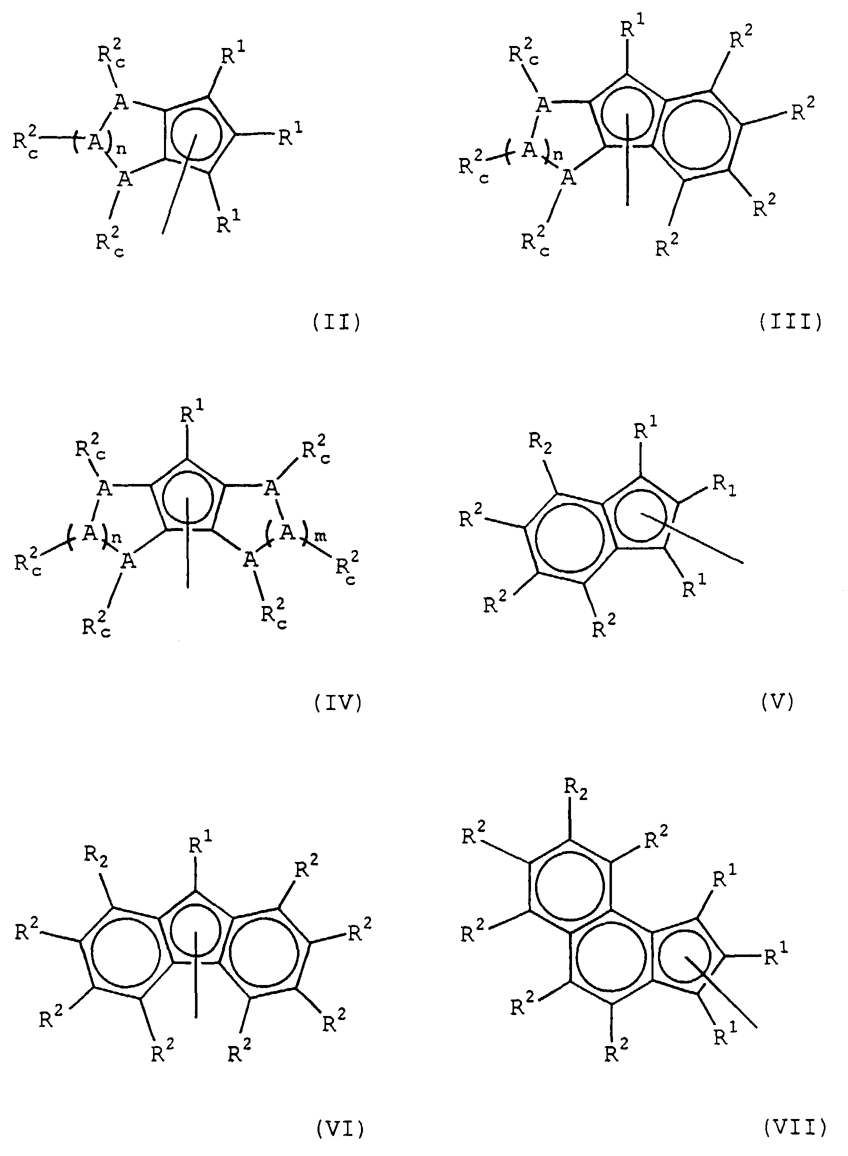
      where A represents an element of Group 13, 14, 15 or 16, and plural A's may be the same or different;
      R¹ and R² each represent a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, a carboxyl group, or an alkylsilyl or alkylsilylalkyl group having from 3 to 30 carbon atoms, and R¹ and R² may be the same or different, and may be bonded to each other to form a cyclic structure, but at least one R¹ is an alkyl group having at least 2 carbon atoms;
      c represents 1 or 2; and
      n and m each represent an integer of 1 or more.

      In formulae (II) to (VII), at least one R¹ is an alkyl group having at least 2 carbon atoms. As the alkyl group having at least 2 carbon atoms, preferred is an alkyl group having from 2 to 10 carbon atoms. Concretely, it includes an ethyl group, a propyl group, a butyl group, a pentyl group, a hexyl group, an octyl group, etc. Of those, preferred are an ethyl group, a propyl group, a butyl group and a pentyl group; and more preferred is an ethyl group.
      The alkyl group having at least 2 carbon atoms has a higher electron-donating ability than a hydrogen atom or a methyl group, and is larger in steric size than the latter. Therefore, it is believed that the catalyst comprising the transition metal compound as combined with the component (B) or with the components (B) and (C) could exhibit improved stability and improved catalytic activity because of the characteristic of the substituent of an alkyl group having at least 2 carbon atoms to be in the transition metal compound.
      In formulae (II), (III) and (IV), A is preferably an element of Group 14, more preferably carbon, and n and m each are preferably from 1 to 4.
   [ii] Transition metal compounds of formula (I) in which R is any of 4,5,6,7-tetrahydroindenyl groups.
   [iii] Transition metal compounds of formula (I) in which R is selected from a 1-ethyl-4,5,6,7-tetrahydroindenyl group, a 1-ethyl-2-methyl-4,5,6,7-tetrahydroindenyl group and a 2-ethyl-4,5,6,7-tetrahydroindenyl group.
(3) Specific examples of R in the transition metal compounds noted above are mentioned below. In indenyl groups and fluorenyl groups, the position of the substituent is numbered as follows: 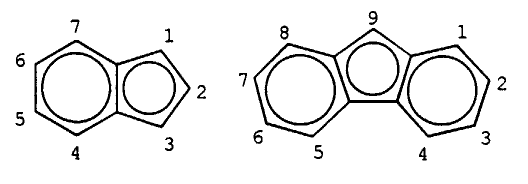
   R includes, for example, 1-ethylindenyl group, 1-ethyl-2-methylindenyl group, 1-ethyl-3-methylindenyl group, 1-ethyl-2,3-dimethylindenyl group, 1,2-diethylindenyl group, 1,3-diethylindenyl group, 1,2,3-triethylindenyl group, 2-ethylindenyl group, 1-methyl-2-ethylindenyl group, 1,3-dimethyl-2-ethylindenyl group, 1-ethyl-4,5,6,7-tetrahydroindenyl group, 1-ethyl-2-methyl-4,5,6,7-tetrahydroindenyl group, 1-ethyl-3-methyl-4,5,6,7-tetrahydroindenyl group, 1-ethyl-2,3-dimethyl-4,5,6,7-tetrahydroindenyl group, 1,2-diethyl-4,5,6,7-tetrahydroindenyl group, 1,2-diethyl-3-methyl-4,5,6,7-tetrahydroindenyl group, 1,3-diethyl-4,5,6,7-tetrahydroindenyl group, 1,3-diethyl-2-methyl-4,5,6,7-tetrahydroindenyl group, 1,2,3-triethyl-4,5,6,7-tetrahydroindenyl group, 2-ethyl-4,5,6,7-tetrahydroindenyl group, 1-methyl-2-ethyl-4,5,6,7-tetrahydroindenyl group, 1,3-dimethyl-2-ethyl-4,5,6,7-tetrahydroindenyl group, 9-ethylfluorenyl group, 9-ethyl-1,2,3,4-tetrahydrofluorenyl group, 9-ethyl-1,2,3,4,5,6,7,8-octahydrofluorenyl group, etc.
   M is a transition metal, including, for example, Ti, Zr, Hf, Nb, Ta, lanthanoid metals, Ni, Pd. Preferred are Ti, Zr, Hf; more preferred is Ti. X is a σ ligand, concretely including a hydrogen atom, a halogen atom, an aliphatic hydrocarbon group having from 1 to 20 carbon atoms, an aromatic group having from 6 to 20 carbon atoms, an alkoxy group having from 1 to 20 carbon atoms, a thioalkoxy group, a thioaryloxy group having from 6 to 20 carbon atoms, an amino group having from 1 to 20 carbon atoms, an amido group, a carboxyl group, an alkylsilyl group, etc. Plural X's may be the same or different, and may be bonded to each other via any group therebetween. As specific examples of X, mentioned are hydrogen atom, chlorine atom, bromine atom, fluorine atom, iodine atom, methyl group, benzyl group, phenyl group, trimethylsilyl group, methoxy group, ethoxy group, phenoxy group, etc.
(4) In formula (I) for the transition metal compound, R and X could be suitably selected from their examples noted above. Specific examples of the transition metal compound are mentioned below.
   The transition metal compound includes, for example, 1-ethyl-4,5,6,7-tetrahydroindenyltitanium trichloride, 1-ethyl-4,5,6,7-tetrahydroindenyltrimethyltitanium, 1-ethyl-4,5,6,7-tetrahydroindenyltitanium trimethoxide, 1-ethyl-4,5,6,7-tetrahydroindenyltribenzyltitanium, 1-ethyl-2-methyl-4,5,6,7-tetrahydroindenyltitanium trichloride, 1-ethyl-2-methyl-4,5,6,7-tetrahydroindenyltrimethyltitanium, 1-ethyl-2-methyl-4,5,6,7-tetrahydroindenyltitanium trimethoxide, 1-ethyl-2-methyl-4,5,6,7-tetrahydroindenyltribenzyltitanium, 1-ethyl-3-methyl-4,5,6,7-tetrahydroindenyltitanium trichloride, 1-ethyl-3-methyl-4,5,6,7-tetrahydroindenyltrimethyltitanium, 1-ethyl-3-methyl-4,5,6,7-tetrahydroindenyltitanium trimethoxide, 1-ethyl-3-methyl-4,5,6,7-tetrahydroindenyltribenzyltitanium, 1-ethyl-2,3-dimethyl-4,5,6,7-tetrahydroindenyltitanium trichloride, 1-ethyl-2,3-dimethyl-4,5,6,7-tetrahydroindenyltrimethyltitanium, 1-ethyl-2,3-dimethyl-4,5,6,7-tetrahydroindenyltitanium trimethoxide, 1-ethyl-2,3-dimethyl-4,5,6,7-tetrahydroindenyltribenzyltitanium, 1,2-diethyl-4,5,6,7-tetrahydroindenyltitanium trichloride, 1,2-diethyl-4,5,6,7-tetrahydroindenyltrimethyltitanium, 1,2-diethyl-4,5,6,7-tetrahydroindenyltitanium trimethoxide, 1,2-diethyl-4,5,6,7-tetrahydroindenyltribenzyltitanium, 1,2-diethyl-3-methyl-4,5,6,7-tetrahydroindenyltitanium trichloride, 1,2-diethyl-3-methyl-4,5,6,7-tetrahydroindenyltrimethyltitanium, 1,2-diethyl-3-methyl-4,5,6,7-tetrahydroindenyltitanium trimethoxide, 1,2-diethyl-3-methyl-4,5,6,7-tetrahydroindenyltribenzyltitanium, 1,3-diethyl-4,5,6,7-tetrahydroindenyltitanium trichloride, 1,3-diethyl-4,5,6,7-tetrahydroindenyltrimethyltitanium, 1,3-diethyl-4,5,6,7-tetrahydroindenyltitanium trimethoxide, 1,3-diethyl-4,5,6,7-tetrahydroindenyltribenzyltitanium, 1,3-diethyl-2-methyl-4,5,6,7-tetrahydroindenyltitanium trichloride, 1,3-diethyl-2-methyl-4,5,6,7-tetrahydroindenyltrimethyltitanium, 1,3-diethyl-2-methyl-4,5,6,7-tetrahydroindenyltitanium trimethoxide, 1,3-diethyl-2-methyl-4,5,6,7-tetrahydroindenyltribenzyltitanium, 1,2,3-triethyl-4,5,6,7-tetrahydroindenyltitanium trichloride, 1,2,3-triethyl-4,5,6,7-tetrahydroindenyltrimethyltitanium, 1,2,3-triethyl-4,5,6,7-tetrahydroindenyltitanium trimethoxide, 1,2,3-triethyl-4,5,6,7-tetrahydroindenyltribenzyltitanium, 2-ethyl-4,5,6,7-tetrahydroindenyltitanium trichloride, 2-ethyl-4,5,6,7-tetrahydroindenyltrimethyltitanium, 2-ethyl-4,5,6,7-tetrahydroindenyltitanium trimethoxide, 2-ethyl-4,5,6,7-tetrahydroindenyltribenzyltitanium, 1-methyl-2-ethyl-4,5,6,7-tetrahydroindenyltitanium trichloride, 1-methyl-2-ethyl-4,5,6,7-tetrahydroindenyltrimethyltitanium, 1-methyl-2-ethyl-4,5,6,7-tetrahydroindenyltitanium trimethoxide, 1-methyl-2-ethyl-4,5,6,7-tetrahydroindenyltribenzyltitanium, 1,3-dimethyl-2-ethyl-4,5,6,7-tetrahydroindenyltitanium trichloride, 1,3-dimethyl-2-ethyl-4,5,6,7-tetrahydroindenyltrimethyltitanium, 1,3-dimethyl-2-ethyl-4,5,6,7-tetrahydroindenyltitanium trimethoxide, 1,3-dimethyl-2-ethyl-4,5,6,7-tetrahydroindenyltribenzyltitanium, 3-ethyl-4,5,6,7-tetrahydroindenyltitanium trichloride, 3-ethyl-4,5,6,7-tetrahydroindenyltrimethyltitanium, 3-ethyl-4,5,6,7-tetrahydroindenyltitanium trimethoxide, 3-ethyl-4,5,6,7-tetrahydroindenyltribenzyltitanium, 2-methyl-3-ethyl-4,5,6,7-tetrahydroindenyltitanium trichloride, 2-methyl-3-ethyl-4,5,6,7-tetrahydroindenyltrimethyltitanium, 2-methyl-3-ethyl-4,5,6,7-tetrahydroindenyltitanium trimethoxide, 2-methyl-3-ethyl-4,5,6,7-tetrahydroindenyltribenzyltitanium, 9-ethyl-1,2,3,4-tetrahydrofluorenyltitanium trichloride, 9-ethyl-1,2,3,4-tetrahydrofluorenyltrimethyltitanium, 9-ethyl-1,2,3,4-tetrahydrofluorenyltitanium trimethoxide, 9-ethyl-1,2,3,4-tetrahydrofluorenyltribenzyltitanium, 9-ethyl-1,2,3,4,5,6,7,8-octahydrofluorenyltitanium trichloride, 9-ethyl-1,2,3,4,5,6,7,8-octahydrofluorenyltrimethyltitanium, 9-ethyl-1,2,3,4,5,6,7,8-octahydrofluorenyltitanium trimethoxide, 9-ethyl-1,2,3,4,5,6,7,8-octahydrofluorenyltribenzyltitanium, etc.; as well as their analogues having zirconium, hafnium or any other transition metal element of other Groups or lanthanoid series in place of titanium.
   Of those, preferred are titanium compounds having any of 1-ethyl-2-methyl-4,5,6,7-tetrahydroindenyl group, 1-ethyl-4,5,6,7-tetrahydroindenyl group or 2-ethyl-4,5,6,7-tetrahydroindenyl group. Concretely, they includes the compounds mentioned above.
   Another transition metal compound of the invention is mentioned below.
(5) A transition metal compound of a general formula (VIII):

   R'M'Xₐ₋₁L_{b} (VIII)

   wherein R' represents a substituted cyclopentadienyl group, a substituted indenyl group, or a substituted fluorenyl group, which has at least one substituent R³ of the following general formula (IX) and in which the other substituents R⁴'s are any of a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, a carboxyl group and an alkylsilyl group having from 3 to 30 carbon atoms, and plural R⁴'s may be the same or different; and, irrespective of R³ and R⁴, the substituents on R' may be bonded to each other to form a cyclic compound;
   M' represents a transition metal of Group 4 to Group 10;
   X represents a σ ligand, concretely including a hydrogen atom, a halogen atom, an aliphatic hydrocarbon group having from 1 to 30 carbon atoms, an aromatic hydrocarbon group having from 6 to 30 carbon atoms, an alkoxy or thioalkoxy group having from 1 to 30 carbon atoms, a thioaryloxy group having from 6 to 30 carbon atoms, or an amino, amido, carboxyl or alkylsilyl group having from 1 to 30 carbon atoms, and plural X's may be the same or different, and may be bonded to each other via any group therebetween;
   L represents a Lewis base, and plural L's, if any, may be the same or different;
   a represents the valency of M; and
   b represents 0, 1 or 2, 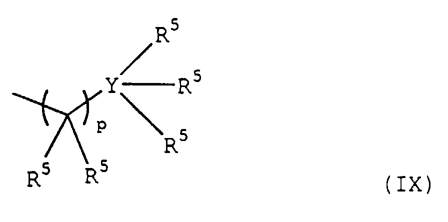
      where Y represents a silicon atom, a germanium atom, or a tin atom;
      p represents an integer of 1 or more;
      R⁵ represents a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, a carboxyl group, or an alkylsilyl group having from 3 to 30 carbon atoms, and plural R⁵'s may be the same or different.
(6) As the transition metal compound to be the component (A') in the polymerization catalyst, which is mentioned hereinunder, preferred are the following:
   [i] Transition metal compounds of formula (VIII) in which R' is a group of a general formula (X): 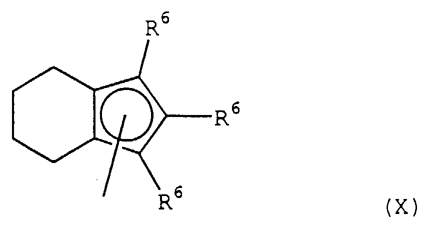 wherein at least one R⁶ is an alkylsilylalkyl group having a structure of the following general formula (XI), and the other R⁶'s are any of a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, a carboxyl group and an alkylsilyl group having from 3 to 30 carbon atoms, and plural R⁶'s may be the same or different, 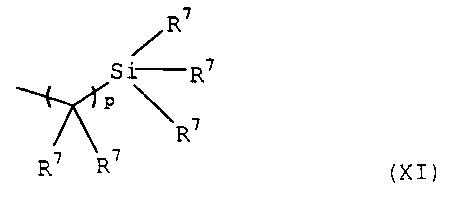
      where p represents an integer of 1 or more;
      R⁷ represents a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, a carboxyl group, or an alkylsilyl group having from 3 to 30 carbon atoms, and plural R⁷'s may be the same or different.
   [ii] Transition metal compounds of formula (VIII) in which R' is a group of a general formula (XII): 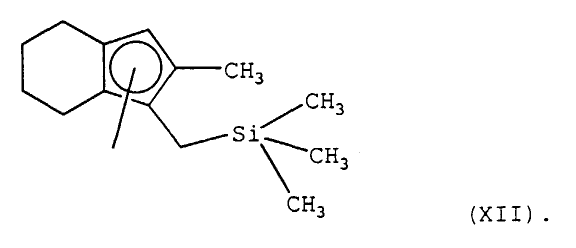
(7) Specific examples of R' in the transition metal compounds noted above include 1-trimethylsilylmethylcyclopentadienyl group, 1-methyl-2-trimethylsilylmethylcyclopentadienyl group, 1,2,3-trimethyl-4-trimethylsilylmethylcyclopentadienyl group, 1,2,3,4-tetramethyl-5-trimethylsilylmethylcyclopentadienyl group, 1-trimethylsilylmethyl-4,5,6,7-tetrahydroindenyl group, 1-trihydrosilylmethyl-4,5,6,7-tetrahydroindenyl group, 1-dimethylphenylsilylmethyl-4,5,6,7-tetrahydroindenyl group, 1-dimethylethylsilylmethyl-4,5,6,7-tetrahydroindenyl group, 1-dimethyl(t-butyl)silylmethyl-4,5,6,7-tetrahydroindenyl group, 2-trimethylsilylmethyl-4,5,6,7-tetrahydroindenyl group, 2-trihydrosilylmethyl-4,5,6,7-tetrahydroindenyl group, 2-dimethylphenylsilylmethyl-4,5,6,7-tetrahydroindenyl group, 2-dimethylethylsilylmethyl-4,5,6,7-tetrahydroindenyl group, 2-dimethyl(t-butyl)silylmethyl-4,5,6,7-tetrahydroindenyl group, 1-trimethylsilylmethyl-2-methyl-4,5,6,7-tetrahydroindenyl group, 1-trihydrosilylmethyl-2-methyl-4,5,6,7-tetrahydroindenyl group, 1-dimethylphenylsilylmethyl-2-methyl-4,5,6,7-tetrahydroindenyl group, 1-dimethylethylsilylmethyl-2-methyl-4,5,6,7-tetrahydroindenyl group, 1-dimethyl(t-butyl)silylmethyl-2-methyl-4,5,6,7-tetrahydroindenyl group, 2-trimethylsilylmethyl-1-methyl-4,5,6,7-tetrahydroindenyl group, 2-trihydrosilylmethyl-1-methyl-4,5,6,7-tetrahydroindenyl group, 2-dimethylphenylsilylmethyl-1-methyl-4,5,6,7-tetrahydroindenyl group, 2-dimethylethylsilylmethyl-1-methyl-4,5,6,7-tetrahydroindenyl group, 2-dimethyl(t-butyl)silylmethyl-1-methyl-4,5,6,7-tetrahydroindenyl group, 1-trimethylsilylmethyl-3-methyl-4,5,6,7-tetrahydroindenyl group, 1-trihydrosilylmethyl-3-methyl-4,5,6,7-tetrahydroindenyl group, 1-dimethylphenylsilylmethyl-3-methyl-4,5,6,7-tetrahydroindenyl group, 1-dimethylethylsilylmethyl-3-methyl-4,5,6,7-tetrahydroindenyl group, 1-dimethyl(t-butyl)silylmethyl-3-methyl-4,5,6,7-tetrahydroindenyl group, etc.
(8) Specific examples of the transition metal compounds noted above include 1-trimethylsilylmethylcyclopentadienyltitanium trichloride, 1-trimethylsilylmethylcyclopentadienyltitanium trimethoxide, 1-trimethylsilylmethylcyclopentadienyltrimethyltitanium, 1-trimethylsilylmethylcyclopentadienyltribenzyltitanium, 1-methyl-2-trimethylsilylmethylcyclopentadienyltitanium trichloride, 1-methyl-2-trimethylsilylmethylcyclopentadienyltitanium trimethoxide, 1-methyl-2-trimethylsilylmethylcyclopentadienyltrimethyltitanium, 1-methyl-2-trimethylsilylmethylcyclopentadienyltribenzyltitanium, 1,2,3-trimethyl-4-trimethylsilylmethylcyclopentadienyltitanium trichloride, 1,2,3-trimethyl-4-trimethylsilylmethylcyclopentadienyltitanium trimethoxide, 1,2,3-trimethyl-4-trimethylsilylmethylcyclopentadienyltrimethyltitanium, 1,2,3-trimethyl-4-trimethylsilylmethylcyclopentadienyltribenzyltitanium, 1,2,3,4-tetramethyl-5-trimethylsilylmethylcyclopentadienyltitanium trichloride, 1,2,3,4-tetramethyl-5-trimethylsilylmethylcyclopentadienyltitanium trimethoxide, 1,2,3,4-tetramethyl-5-trimethylsilylmethylcyclopentadienyltrimethyltitanium, 1,2,3,4-tetramethyl-5-trimethylsilylmethylcyclopentadienyltribenzyltitanium, 1-trimethylsilylmethyl-4,5,6,7-tetrahydroindenyltitanium trichloride, 1-trimethylsilylmethyl-4,5,6,7-tetrahydroindenyltitanium trimethoxide, 1-trimethylsilylmethyl-4,5,6,7-tetrahydroindenyltrimethyltitanium, 1-trimethylsilylmethyl-4,5,6,7-tetrahydroindenyltribenzyltitanium, 2-trimethylsilylmethyl-4,5,6,7-tetrahydroindenyltitanium trichloride, 2-trimethylsilylmethyl-4,5,6,7-tetrahydroindenyltitanium trimethoxide, 2-trimethylsilylmethyl-4,5,6,7-tetrahydroindenyltrimethyltitanium, 2-trimethylsilylmethyl-4,5,6,7-tetrahydroindenyltribenzyltitanium, 1-trimethylsilylmethyl-2-methyl-4,5,6,7-tetrahydroindenyltitanium trichloride, 1-trimethylsilylmethyl-2-methyl-4,5,6,7-tetrahydroindenyltitanium trimethoxide, 1-trimethylsilylmethyl-2-methyl-4,5,6,7-tetrahydroindenyltrimethyltitanium, 1-trimethylsilylmethyl-2-methyl-4,5,6,7-tetrahydroindenyltribenzyltitanium, 2-trimethylsilylmethyl-1-methyl-4,5,6,7- tetrahydroindenyltitanium trichloride, 2-trimethylsilylmethyl-1-methyl-4,5,6,7-tetrahydroindenyltitanium trimethoxide, 2-trimethylsilylmethyl-1-methyl-4,5,6,7-tetrahydroindenyltrimethyltitanium, 2-trimethylsilylmethyl-1-methyl-4,5,6,7-tetrahydroindenyltribenzyltitanium, 1-trimethylsilylmethyl-3-methyl-4,5,6,7-tetrahydroindenyltitanium trichloride, 1-trimethylsilylmethyl-3-methyl-4,5,6,7-tetrahydroindenyltitanium trimethoxide, 1-trimethylsilymethyl-3-methyl-4,5,6,7-tetrahydroindenyltrimethyltitanium, 1-trimethylsilylmethyl-3-methyl-4,5,6,7-tetrahydroindenyltribenzyltitanium, 1-trihydrosilylmethyl-4,5,6,7-tetrahydroindenyltitanium trichloride, 1-trihydrosilylmethyl-4,5,6,7-tetrahydroindenyltitanium trimethoxide, 1-trihydrosilylmethyl-4,5,6,7-tetrahydroindenyltrimethyltitanium, 1-trihydrosilylmethyl-4,5,6,7-tetrahydroindenyltribenzyltitanium, 2-trihydrosilymethyl-4,5,6,7-tetrahydroindenyltitanium trichloride, 2-trihydrosilylmethyl-4,5,6,7-tetrahydroindenyltitanium trimethoxide, 2-trihydrosilylmethyl-4,5,6,7-tetrahydroindenyltrimethyltitanium, 2-trihydrosilylmethyl-4,5,6,7-tetrahydroindenyltribenzyltitanium, 1-trihydrosilylmethyl-2-methyl-4,5,6,7-tetrahydroindenyltitanium trichloride, 1-trihydrosilylmethyl-2-methyl-4,5,6,7-tetrahydroindenyltitanium trimethoxide, 1-trihydrosilylmethyl-2-methyl-4,5,6,7-tetrahydroindenyltrimethyltitanium, 1-trihydrosilylmethyl-2-methyl-4,5,6,7-tetrahydroindenyltribenzyltitanium, 2-trihydrosilylmethyl-1-methyl-4,5,6,7-tetrahydroindenyltitanium trichloride, 2-trihydrosilylmethyl-1-methyl-4,5,6,7-tetrahydroindenyltitanium trimethoxide, 2-trihydrosilylmethyl-1-methyl-4,5,6,7-tetrahydroindenyltrimethyltitanium, 2-trihydrosilylmethyl-1-methyl-4,5,6,7-tetrahydroindenyltribenzyltitanium, 1-trihydrosilylmethyl-3-methyl-4,5,6,7-tetrahydroindenyltitanium trichloride, 1-trihydrosilylmethyl-3-methyl-4,5,6,7-tetrahydroindenyltitanium trimethoxide, 1-trihydrosilylmethyl-3-methyl-4,5,6,7-tetrahydroindenyltrimethyltitanium, 1-trihydrosilylmethyl-3-methyl-4,5,6,7-tetrahydroindenyltribenzyltitanium, 1-dimethylphenylsilylmethyl-4,5,6,7-tetrahydroindenyltitanium trichloride, 1-dimethylphenylsilylmethyl-4,5,6,7-tetrahydroindenyltitanium trimethoxide, 1-dimethylphenylsilylmethyl-4,5,6,7- tetrahydroindenyltrimethyltitanium, 1-dimethylphenylsilylmethyl-4,5,6,7-tetrahydroindenyltribenzyltitanium, 2-dimethylphenylsilylmethyl-4,5,6,7-tetrahydroindenyltitanium trichloride, 2-dimethylphenylsilylmethyl-4,5,6,7-tetrahydroindenyltitanium trimethoxide, 2-dimethylphenylsilylmethyl-4,5,6,7-tetrahydroindenyltrimethyltitanium, 2-dimethylphenylsilylmethyl-4,5,6,7-tetrahydroindenyltribenzyltitanium, 1-dimethylphenylsilylmethyl-2-methyl-4,5,6,7-tetrahydroindenyltitanium trichloride, 1-dimethylphenylsilylmethyl-2-methyl-4,5,6,7-tetrahydroindenyltitanium trimethoxide, 1-dimethylphenylsilylmethyl-2-methyl-4,5,6,7-tetrahydroindenyltrimethyltitanium, 1-dimethylphenylsilylmethyl-2-methyl-4,5,6,7-tetrahydroindenyltribenzyltitanium, 2-dimethylphenylsilylmethyl-1-methyl-4,5,6,7-tetrahydroindenyltitanium trichloride, 2-dimethylphenylsilylmethyl-1-methyl-4,5,6,7-tetrahydroindenyltitanium trimethoxide, 2-dimethylphenylsilylmethyl-1-methyl-4,5,6,7-tetrahydroindenyltrimethyltitanium, 2-dimethylphenylsilylmethyl-1-methyl-4,5,6,7- tetrahydroindenyltribenzyltitanium, 1-dimethylphenylmethyl-3-methyl-4,5,6,7-tetrahydroindenyltitanium trichloride, 1-dimethylphenylsilylmethyl-3-methyl-4,5,6,7-tetrahydroindenyltitanium trimethoxide, 1-dimethylphenylsilylmethyl-3-methyl-4,5,6,7-tetrahydroindenyltrimethyltitanium, 1-dimethylphenylsilylmethyl-3-methyl-4,5,6,7-tetrahydroindenyltribenzyltitanium, 1-dimethylethylsilylmethyl-4,5,6,7-tetrahydroindenyltitanium trichloride, 1-dimethylethylsilylmethyl-4,5,6,7-tetrahydroindenyltitanium trimethoxide, 1-dimethylethylsilylmethyl-4,5,6,7-tetrahydroindenyltrimethyltitanium, 1-dimethylethylsilylmethyl-4,5,6,7-tetrahydroindenyltribenzyltitanium, 2-dimethylethylsilylmethyl-4,5,6,7-tetrahydroindenyltitanium trichloride, 2-dimethylethylsilylmethyl-4,5,6,7-tetrahydroindenyltitanium trimethoxide, 2-dimethylethylsilylmethyl-4,5,6,7-tetrahydroindenyltrimethyltitanium, 2-dimethylethylsilylmethyl-4,5,6,7-tetrahydroindenyltribenzyltitanium, 1-dimethylethylsilylmethyl-2-methyl-4,5,6,7-tetrahydroindenyltitanium trichloride, 1-dimethylethylsilylmethyl-2-methyl-4,5,6,7- tetrahydroindenyltitanium trimethoxide, 1-dimethylethylsilylmethyl-2-methyl-4,5,6,7-tetrahydroindenyltrimethyltitanium, 1-dimethylethylsilylmethyl-2-methyl-4,5,6,7-tetrahydroindenyltribenzyltitanium, 2-dimethylethylsilylmethyl-1-methyl-4,5,6,7-tetrahydroindenyltitanium trichloride, 2-dimethylethylsilylmethyl-1-methyl-4,5,6,7-tetrahydroindenyltitanium trimethoxide, 2-dimethylethylsilylmethyl-1-methyl-4,5,6,7-tetrahydroindenyltrimethyltitanium, 2-dimethylethylsilylmethyl-1-methyl-4,5,6,7-tetrahydroindenyltribenzyltitanium, 1-dimethylethylsilylmethyl-3-methyl-4,5,6,7-tetrahydroindenyltitanium trichloride, 1-dimethylethylsilylmethyl-3-methyl-4,5,6,7-tetrahydroindenyltitanium trimethoxide, 1-dimethylethylsilylmethyl-3-methyl-4,5,6,7-tetrahydroindenyltrimethyltitanium, 1-dimethylethylsilylmethyl-3-methyl-4,5,6,7-tetrahydroindenyltribenzyltitanium, 1-dimethyl(t-butyl)silylmethyl-4,5,6,7-tetrahydroindenyltitanium trichloride, 1-dimethyl(t-butyl)silylmethyl-4,5,6,7-tetrahydroindenyltitanium trimethoxide, 1-dimethyl(t-butyl)silylmethyl-4,5,6,7- tetrahydroindenyltrimethyltitanium, 1-dimethyl(t-butyl)silylmethyl-4,5,6,7-tetrahydroindenyltribenzyltitanium, 2-dimethyl(t-butyl)silylmethyl-4,5,6,7-tetrahydroindenyltitanium trichloride, 2-dimethyl(t-butyl)silylmethyl-4,5,6,7-tetrahydroindenyltitanium trimethoxide, 2-dimethyl(t-butyl)silylmethyl-4,5,6,7-tetrahydroindenyltrimethyltitanium, 2-dimethyl(t-butyl)silylmethyl-4,5,6,7-tetrahydroindenyltribenzyltitanium, 1-dimethyl(t-butyl)silylmethyl-2-methyl-4,5,6,7-tetrahydroindenyltitanium trichloride, 1-dimethyl(t-butyl)silylmethyl-2-methyl-4,5,6,7-tetrahydroindenyltitanium trimethoxide, 1-dimethyl(t-butyl)silylmethyl-2-methyl-4,5,6,7-tetrahydroindenyltrimethyltitanium, 1-dimethyl(t-butyl)silylmethyl-2-methyl-4,5,6,7-tetrahydroindenyltribenzyltitanium, 2-dimethyl(t-butyl)silylmethyl-1-methyl-4,5,6,7-tetrahydroindenyltitanium trichloride, 2-dimethyl(t-butyl)silylmethyl-1-methyl-4,5,6,7-tetrahydroindenyltitanium trimethoxide, 2-dimethyl(t-butyl)silylmethyl-1-methyl-4,5,6,7-tetrahydroindenyltrimethyltitanium, 2-dimethyl(t-butyl)silylmethyl-1-methyl-4,5,6,7- tetrahydroindenyltribenzyltitanium, 1-dimethyl(t-butyl)silylmethyl-3-methyl-4,5,6,7-tetrahydroindenyltitanium trichloride, 1-dimethyl(t-butyl)silylmethyl-3-methyl-4,5,6,7-tetrahydroindenyltitanium trimethoxide, 1-dimethyl(t-butyl)silylmethyl-3-methyl-4,5,6,7-tetrahydroindenyltrimethyltitanium, 1-dimethyl(t-butyl)silylmethyl-3-methyl-4,5,6,7-tetrahydroindenyltribenzyltitanium, etc.; as well as their analogues having zirconium, hafnium or any other transition metal element of other Groups or lanthanoid series in place of titanium. Also mentioned are their analogues having germanium or tin in place of silicon. Of those, preferred are titanium compounds, zirconium compounds and hafnium compounds; and more preferred are titanium compounds.

### 2. Polymerization Catalyst:

### (1) Catalyst Components:

### Component (A) or (A'):

Transition metal compounds for the component (A) or (A') are mentioned hereinabove.

### Component (B):

The component (B) is at least one selected from the following (a), (b) and (c):
(a) An oxygen-containing compound,
(b) A compound capable of reacting with the transition metal compound to form an ionic complex, and
(c) Clay, a clay mineral or an ion-exchanging phyllo-structured compound.

Of those, preferred are (a) an oxygen-containing compound and/or (b) a compound capable of reacting with the transition metal compound to form an ionic complex; and more preferred is (a) an oxygen-containing compound.

### (a) Oxygen-containing compound:

The component (a) includes an oxygen-containing compound of a general formula (XIII): 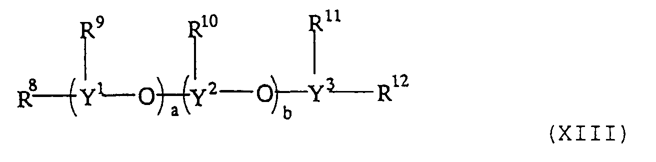 and/or an oxygen-containing compound of a general formula (XIV):

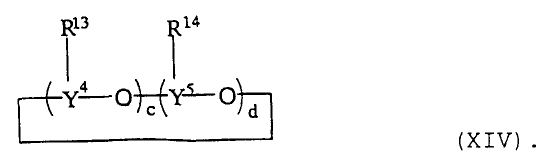

In formulae (XIII) and (XIV), R⁸ to R¹⁴ each represent an alkyl group having from 1 to 8 carbon atoms, concretely including a methyl group, an ethyl group, an n-propyl group, an isopropyl group, various butyl groups, various pentyl groups, various hexyl groups, various heptyl groups, and various octyl groups. R⁸ to R¹² may be the same or different; and R¹³ and R¹⁴ may be the same or different. Y¹ to Y⁵ each represent an element of Group 13 of the Periodic Table, concretely including B, Al, Ga, In and Tl. Of those, preferred are B and Al. Y¹ to Y³ may be the same or different; and Y⁴ and Y⁵ may be the same or different. a to d each represent a number of from 0 to 50, but (a + b) and (c + d) each are at least 1. Preferably, a to d each fall between 0 and 20, more preferably between 0 and 5.

As the oxygen-containing compound for the catalyst component, preferred are alkylaluminoxanes. As their specific examples, mentioned are methylaluminoxane and isobutylaluminoxane.

### (b) Compound capable of reacting with the transition metal compound to form an ionic complex:

The compound capable of reacting with the transition metal compound to form an ionic complex includes coordination complex compounds that comprise an anion with plural groups bonded to a metal, and a cation, and Lewis acids. Known are various coordination complex compounds that comprise an anion with plural groups bonded to a metal, and a cation. For example, compounds of the following general formula (XV) or (XVI) are preferably used in the invention.

([L¹-H]^{g+})ₕ([M²X¹X² . . . Xⁿ]^{(n-m)-})ᵢ (XV)

([L²]^{g+})ₕ([M³X¹X² . . . Xⁿ]^{(n-m)-})ᵢ (XVI)

wherein L² indicates M⁴, R⁹R¹⁰M⁵ or R¹¹₃C, which will be mentioned hereinafter;
L¹ represents a Lewis base;
M² and M³ each represent a metal selected from Group 5 to Group 15 of the Periodic Table;
M⁴ represents a metal selected from Group 1, and Group 8 to Group 12 of the Periodic Table;
M⁵ represents a metal selected from Group 8 to Group 10 of the Periodic Table;
X¹ to Xⁿ each represent a hydrogen atom, a dialkylamino group, an alkoxy group, an aryloxy group, an alkyl group having from 1 to 20 carbon atoms, an aryl group having from 6 to 20 carbon atoms, an alkylaryl group, an arylalkyl group, a substituted alkyl group, an organic metalloid group, or a halogen atom;
R⁹ and R¹⁰ each represent a cyclopentadienyl group, a substituted cyclopentadienyl group, an indenyl group, or a fluorenyl group;
R¹¹ represents an alkyl group;
m indicates the valency of M² or M³, and represents an integer of from 1 to 7;
n represents an integer of from 2 to 8;
g indicates the ion valency of L¹-H or L², and represents an integer of from 1 to 7;
h represents an integer of 1 or more; and
i = h x g/(n-m).

Specific examples of M² and M³ include atoms of B, Al, Si, P, As, Sb, etc.; those of M⁴ include atoms of Ag, Cu, Na, Li, etc.; and those of M⁵ include atoms of Fe, Co, Ni, etc. Specific examples of X¹ to Xⁿ include dimethylamino group, diethylamino group, etc., as a dialkylamino group; methoxy group, ethoxy group, n-butoxy group, etc., as an alkoxy group; phenoxy group, 2,6-dimethylphenoxy group, naphthyloxy group, etc., as an aryloxy group; methyl group, ethyl group, n-propyl group, isopropyl group, n-butyl group, n-octyl group, 2-ethylhexyl group, etc., as an alkyl group having from 1 to 20 carbon atoms; phenyl group, p-tolyl group, benzyl group, pentafluorophenyl group, 3,5-di(trifluoromethyl)phenyl group, 4-tert-butylphenyl group, 2,6-dimethylphenyl group, 3,5-dimethylphenyl group, 2,4-dimethylphenyl group, 1,2-dimethylphenyl group, etc., as an aryl, alkylaryl or arylalkyl group having from 6 to 20 carbon atoms; F, Cl, Br, I, as a halogen; and 5-methylantimonyl group, trimethylsilyl group, trimethylgermyl group, diphenylarsenyl group, dicyclohexylantimonyl group, diphenylboryl group, etc., as an organic metalloid group. Specific examples of the substituted cyclopentadienyl group for R⁹ and R¹⁰ include methylcyclopentadienyl group, butylcyclopentadienyl group, pentamethylcyclopentadienyl group, etc.

In the invention, concretely, the anion with plural groups bonded to a metal includes B(C₆F₅)₄⁻, B(C₆HF₄)₄⁻, B(C₆H₂F₃)₄⁻, B(C₆H₃F₂)₄⁻, B(C₆H₄F)₄⁻, B(C₆CF₃F₄)₄⁻, B(C₆H₅)₄⁻, PF₆⁻, P(C₆F₅)₆⁻, Al(C₆HF₄)₄⁻, etc. The metal cation includes, for example, Cp₂Fe⁺, (MeCp)₂Fe⁺, (tBuCp)₂Fe⁺, (Me₂Cp)₂Fe⁺, (Me₃Cp)₂Fe⁺, (Me₄Cp)₂Fe⁺, (Me₅Cp)₂Fe⁺, Ag⁺, Na⁺, Li⁺, etc. The other cation includes, for example, those from nitrogen-containing compounds, such as pyridinium, 2,4-dinitro-N,N-diethylanilinium, diphenylammonium, p-nitroanilinium, 2,5-dichloranilinium, p-nitro-N,N-dimethylanilinium, quinolinium, N,N-dimethylanilinium, N,N-diethylanilinium, etc.; those from carbenium compounds such as triphenylcarbenium, tri(4-methylphenyl)carbenium, tri(4-methoxyphenyl)carbenium, etc.; alkylphosphonium ions such as CH₃PH₃⁺, C₂H₅PH₃⁺, C₃H₇PH₃⁺, (CH₃)₂PH₂⁺, (C₂H₅)₂PH₂⁺, (C₃H₇)₂PH₂⁺, (CH₃)₃PH⁺, (C₂H₅)₃PH⁺, (C₃H₇)₃PH⁺, (CF₃)₃PH⁺, (CH₃)₄P⁺, (C₂H₅)₄P⁺, (C₃H₇)₄P⁺, etc.; arylphosphonium ions such as C₆H₅PH₃⁺, (C₆H₅)₂PH₂⁺, (C₆H₅)₃PH⁺, (C₆H₅)₄P⁺, (C₂H₅)₂(C₆H₅)PH⁺, (CH₃)(C₆H₅)PH₂⁺, (CH₃)₂(C₆H₅)PH⁺, (C₂H₅)₂(C₆H₅)₂P⁺, etc.

Of the compounds of formulae (XV) and (XVI), concretely, the following are especially preferred. Preferred examples of the compounds of formula (XV) include triethylammonium tetraphenylborate, tri(n-butyl)ammonium tetraphenylborate, trimethylammonium tetraphenylborate, triethylammonium tetrakis(pentafluorophenyl)borate, tri(n-butyl)ammonium tetrakis(pentafluorophenyl)borate, triethylammonium hexafluoroarsenate, pyridinium tetrakis(pentafluorophenyl)borate, pyrrolinium tetra(pentafluorophenyl)borate, N,N-dimethylanilinium tetrakis(pentafluorophenyl)borate, methyldiphenylammonium tetrakis(pentafluorophenyl)borate, etc. Preferred examples of the compounds of formula (XVI) include ferrocenium tetraphenylborate, dimethylferrocenium tetrakis (pentafluorophenyl) borate, ferrocenium tetrakis(pentafluorophenyl)borate, decamethylferrocenium tetrakis(pentafluorophenyl)borate, acetylferrocenium tetrakis(pentafluorophenyl)borate, formylferrocenium tetrakis(pentafluorophenyl)borate, cyanoferrocenium tetrakis(pentafluorophenyl)borate, silvertetraphenylborate, silver tetrakis(pentafluorophenyl)borate, trityl tetraphenylborate, trityl tetrakis(pentafluorophenyl)borate, silver hexafluoroarsenate, silver hexafluoroantimonate, silver tetrafluoroborate, etc.

The Lewis acid includes, for example, B(C₆F₅)₃, B(C₆HF₄)₃, B(C₆H₂F₃)₃, B(C₆H₃F₂)₃, B(C₆H₄F)₃, B(C₆H₅)₃, BF₃, B(C₆CF₃F₄)₃, PF₅, P(C₆H₅)₅, Al(C₆HF₄)₃, etc.

### (c) Clay, clay mineral or ion-exchanging phyllo-structured compound:

Clay is meant to indicate an aggregate of fine hydrous silicate minerals. When mixed and kneaded with a suitable amount of water, it becomes plastic. After dried, the plastic mixture gives a rigid body; and after fired at high temperatures, it is sintered. The clay mineral is meant to indicate a hydrous silicate, which is the principal component of clay.

These are not limited to natural substances but may be synthetic products.

As the component (c), also employable is an ion-exchanging phyllo-structured compound. The ion-exchanging phyllo-structured compound is one having a crystallographic structure in which the planes as constructed through ionic bonding or the like are layered in parallel while being bonded to each other via weak bonding force therebetween and in which the ions are exchangeable. Some types of clay minerals are ion-exchanging phyllo-structured compounds.

For example, the ion-exchanging phyllo-structured compound includes ionic crystalline compounds having a phyllo-crystalline structure, such as a hexagonal close-packed structure, an antimony-type structure, a cadmium chloride-type structure, a cadmium iodide-type structure or the like. The ion-exchanging phyllo-structured compound for use in the invention is not limited to natural substances but may be any synthetic product.

Of those clay, clay minerals and ion-exchanging phyllo-structured compounds, preferred are clay minerals, which include, for example, kaolin minerals, serpentine and its analogous minerals, pyrophyllites, talcs, mica clay minerals, chlorites, vermiculites, smectites, mixed phyllo-structured minerals, sepiolites, palygorskites, allophanes, imogolites, kibushi clays, gairome clays, hisingerites, nacrites, etc. More preferred are smectites. Even more preferred are montmorillonite-type, saponite-type and hectorite-type smectites. For removing impurities from it and for changing its structure and function, clay is preferably but optionally subjected to chemical treatment.

The chemical treatment may be any surface treatment for removing impurities from clay, or any other treatment having some influences on the crystal structure of clay. Concretely, it includes acid treatment, alkali treatment, salt treatment, organic treatment, etc.

For example, in acid treatment, employed is any of hydrochloric acid, sulfuric acid, etc.; in alkali treatment, employed is any of an aqueous solution of sodium hydroxide, aqueous ammonia, etc.; in salt treatment, employed is any of magnesium chloride, aluminium chloride, etc.; in organic treatment, employed is any of organic aluminium or silane compounds, ammonium salts, etc. These treating agents may be directly used as they are, or may be used after having been processed with water to have water adsorbed thereon, or after having been dried under heat.

In the polymerization catalyst of the invention, the component (B) may comprise one or more oxygen-containing compounds either singly or as combined for the component (a), or one or more compounds capable of reacting with the transition metal compound to give an ionic complex either singly or as combined for the component (b), or one or more of clay, clay minerals or ion-exchanging phyllo-layered compounds either singly or as combined for the component (c). If desired, the components (a), (b) and (c) may be combined in any desired manner to give the component (B).

### (C) Alkylating Agent:

The polymerization catalyst of the invention may optionally contain an alkylating agent. Various types of alkylating agents are known and employable herein. For example, employable are alkyl group-having aluminium compounds of a general formula (XVII):

R¹⁵ₘ(Al(OR¹⁶)ₙX₃₋ₘ₋ₙ (XVII)

wherein R¹⁵ and R¹⁶ each represent an alkyl group having from 1 to 8 carbon atoms, preferably having from 1 to 4 carbon atoms;
X represents a hydrogen atom or a halogen atom;
0 < m ≤ 3, preferably m is 2 or 3, most preferably 3; and
0 ≤ n < 3, preferably n is 0 or 1;
alkyl group-having magnesium compounds of a general formula (XVIII):

R¹⁵₂Mg (XVIII)

wherein R¹⁵ has the same meaning as above;
alkyl group-having zinc compounds of a general formula (XIX):

R¹⁵₂Zn (XIX)

wherein R¹⁵ has the same meaning as above.

Of those alkyl group-having compounds, preferred are alkyl group-having aluminium compounds, more preferred are trialkylaluminium and dialkylaluminium compounds. As the compounds, concretely mentioned are trialkylaluminiums such as trimethylaluminium, triethylaluminium, tri-n-propylaluminium, tri-isopropylaluminium, tri-n-butylaluminium, tri-isobutylaluminium, tri-t-butylaluminium, etc.; dialkylaluminium halides such as dimethylaluminium chloride, diethylaluminium chloride, di-n-propylaluminium chloride, di-isopropylaiuminium chloride, di-n-butylaluminium chloride, di-isobutylaluminium chloride, di-t-butylaluminium chloride, etc.; dialkylaluminium alkoxides such as dimethylaluminium methoxide, dimethylaluminium ethoxide, etc.; dialkylaluminium hydrides such as dimethylaluminium hydride, diethylaluminium hydride, di-isobutylaluminium hydride, etc. Also mentioned are dialkylmagnesiums such as dimethylmagnesium, diethylmagnesium, di-n-propylmagnesium, di-isopropylmagnesium, etc.; dialkylzincs such as dimethylzinc, diethylzinc, di-n-propylethylzinc, di-isopropylzinc, etc.

### (2) Preparation of Catalyst:

The mode of catalytic polymerization to produce polymers in the presence of the polymerization catalyst of the invention, which comprises the component (A) or (A') and the component (B) and optionally the component (C), is not specifically defined. For example, employable is any of [i] a method of adding the component (C) to a catalytic mixture of the components (A or A') and (B) to prepare the catalyst, followed by contacting the resulting catalyst with monomers to be polymerized; [ii] a method of adding the component (A or A') to a catalytic mixture of the components (B) and (C) to prepare the catalyst, followed by contacting the resulting catalyst with monomers to be polymerized; [iii] a method of adding the component (B) to a catalytic mixture of the components (A or A') and (C) to prepare the catalyst, followed by contacting the resulting catalyst with monomers to be polymerized; [iv] a method of separately contacting the components (A), (B) and (C) or the components (A'), (B) and (C) with monomers to be polymerized; or [v] a method of contacting the component (C) withmonomers to be polymerized, followed by further contacting the resulting contact mixture with the catalyst as prepared in any of [i] to [iii] noted above.

The monomers to be polymerized may be contacted with the catalytic components noted above in an inert gas atmosphere of, for example, nitrogen or the like, at the polymerization temperature for the monomers or lower, or even at any temperature falling between -30 and 200°C.

The polymerization catalyst for use in the invention comprises a combination of the components (A) and (B), or a combination of the components (A') and (B), or a combination of the components (A), (B) and (C), or a combination of the components (A'), (B) and (C), but may further contain any other catalyst components. The mixing ratio of those catalyst components varies, depending on various conditions for the polymerization, and therefore could not be determined unconditionally. In general, however, where the component (B) is an oxygen-containing compound, the molar ratio of (A) or (A') to (B) is preferably from 1/1 to 1/10,000, more preferably from 1/1 to 1/1,000. Where the component (B) is a compound capable of reacting with the transition metal compound to form an ionic complex, the molar ratio of (A) or (A') to (B) is preferably from 0.1/1 to 1/0.1. Where the component (B) in the catalyst is an oxygen-containing compound or a compound capable of reacting with the transition metal compound to form an ionic complex and where the catalyst contains the component (C), the molar ratio of (A) or (A') to (C) preferably falls between 1/0.1 and 1/1,000. Where the component (B) is clay, a clay mineral or an ion-exchanging phyllo-structured compound, the molar ratio of the component (A) or (A') to the hydroxyl moiety of the component (B) of being clay, a clay mineral or an ion-exchanging phyllo-structured compound preferably falls between 1/0.1 and 1/100,000. In this case, when the component (C) is additionally used, it is desirable that the monomers to be polymerized are so contacted with the catalyst that the molar ratio of the component (A) or (A') to the component (C) could fall between 1/0 (but excluding 0) and 1/10,000, relative to one gram of the component (B) of being clay, a clay mineral or an ion-exchanging phyllo-structured compound.

In the invention, where an alkylaluminoxane is used as the component (B) and an alkyl group-having aluminium compound is used as the component (C), the catalyst could exhibit high activity even though the molar ratio of [(B) + (C)] to (A) or (A') (in terms of aluminium/transition metal) is 200 or smaller.

### 3. Production of Polymer:

### (1) Monomers to be Polymerized:

The polymerization catalyst of the invention is used for polymerization of ethylenic unsaturated bond-having compounds. The ethylenic unsaturated bond-having compounds include, for example, olefins, diene compounds, styrenic compounds, etc. The olefins include, for example, a-olefins such as ethylene, propylene, butene-1, pentene-1, hexene-1, heptene-1, octene-1, nonene-1, decene-1, 4-phenylbutene-1, 6-phenylhexene-1, 3-methylbutene-1, 4-methylpentene-1, 3-methylpentene-1, 3-methylhexene-1, 4-methylhexene-1, 5-methylhexene-1, 3,3-dimethylpentene-1, 3,4-dimethylpentene-1, 4,4-dimethylpentene-1, vinylcyclohexane, etc.; halogen-substituted a-olefins such as hexafluoropropene, tetrafluoroethylene, 2-fluoropropene, fluoroethylene, 1,1-difluoroethylene, 3-fluoropropene, trifluoroethylene, 3,4-dichlorobutene-1, etc.; cyclic olefins such as cyclopentene, cyclohexene, norbornene, 5-methylnorbornene, 5-ethylnorbornene, 5-propylnorbornene, 5,6-dimethylnorbornene, 1-methylnorbornene, 7-methylnorbornene, 5,5,6-trimethylnorbornene, 5-phenylnorbornene, 5-benzylnorbornene, etc.

The diene compounds include, for example, linear diene compounds such as butadiene, isoprene, 1,6-hexadiene, etc.; cyclic diene compounds such as norbornadiene, 5-ethylidenenorbornene, 5-vinylnorbornene, 5-vinylcyclohexene, dicyclopentadiene, etc.

The styrenic compounds include, for example, styrene; as well as alkylstyrenes such as p-methylstyrene, o-methylstyrene, m-methylstyrene, 2,4-dimethylstyrene, 2,5-dimethylstyrene, 3,4-dimethylstyrene, 3,5-dimethylstyrene, p-t-butylstyrene, etc.; alkoxystyrenes such as p-methoxystyrene, o-methoxystyrene, m-methoxystyrene, etc.; halogenostyrenes such as p-chlorostyrene, m-chlorostyrene, o-chlorostyrene, p-bromostyrene, m-bromostyrene, o-bromostyrene, p-fluorostyrene, m-fluorostyrene, o-fluorostyrene, o-methyl-p-fluorostyrene, etc.; and also trimethylsilylstyrene, vinylbenzoates, divinylbenzene, etc.

The monomers may be polymerized either singly to give homopolymers or as combined to give copolymers.

### (2) Polymerization Method:

The monomers may be polymerized through bulk polymerization or even through solution polymerization in an aliphatic hydrocarbon solvent such as pentane, hexane or heptane; or in an alicyclic hydrocarbon solvent such as cyclohexane; or in an aromatic hydrocarbon solvent such as benzene, toluene, xylene or ethylbenzene. The polymerization temperature is not specifically defined, but in general, falls between 0 and 200°C, preferably between 20 and 100°C. Where gaseous monomers are polymerized, their partial pressure is generally at most 300 atmospheres, preferably at most 30 atmospheres.

### 4. Method for Producing Styrenic Polymer:

In the invention, the polymerization catalyst is especially preferably used in producing styrenic polymers. In this case, styrenic monomers may be polymerized in the presence of the polymerization catalyst, either singly to give homopolymers or as combined to give copolymers, or one or more styrenic monomers may be copolymerized with one or more other polymerizable unsaturated compounds to give copolymers. The polymerizable unsaturated compounds to be copolymerized with styrenic compounds may be olefins or diene compounds such as those mentioned above.

The styrenic polymers as produced in the presence of the catalyst of the invention have high syndiotacticity in their styrene chain moiety. High syndiotacticity of the styrene chain moiety in the styrenic polymers is meant to indicate that the stereochemical structure of the polymers is of high syndiotacticity. In the styrenic polymers with syndiotacticity, the side chains of phenyl groups or substituted phenyl groups are positioned alternately in the opposite directions relative to the main chain composed of carbon-carbon bonds. The tacticity of the styrenic polymers is determined through nuclear magnetic resonance using isotopic carbon (¹³C-NMR). The tacticity as determined through ¹³C-NMR can be represented in terms of the proportion of plural constituent units as bonded in series. For example, for polymers in which two constituent units are bonded in series, their tacticity is represented in terms of the proportion of the diads existing therein; for those in which three are bonded in series, it is represented in terms of the proportion of the triads therein; and for those in which five are bonded in series, it is represented in terms of the proportion of the pentads therein. The "styrenic polymers having a syndiotactic structure" as referred to herein indicate polystyrenes, poly(substituted styrenes), poly(vinylbenzoates) and their mixture as well as copolymers consisting essentially of them, which have a degree of syndiotacticity in terms of racemidiad of generally at least 75 %, preferably at least 85 %, or in terms of racemipentad of generally at least 30 %, preferably at least 50 %.

The poly(substituted styrenes) include poly(hydrocarbon-substituted styrenes) such as poly(methylstyrene), poly(ethylstyrene), poly(isopropylstyrene), poly(tert-butylstyrene), poly(phenylstyrene), poly(vinylstyrene), etc.; poly(halogenostyrenes) such as poly(chlorostyrene), poly(bromostyrene), poly(fluorostyrene), etc.; poly(alkoxystyrenes) such as poly(methoxystyrene), poly(ethoxystyrene), etc. Of those styrenic polymers, preferred are polystyrene, poly(p-methylstyrene), poly(m-methylstyrene), poly(p-tert-butylstyrene), poly(p-chlorostyrene), poly(m-chlorostyrene), poly(p-fluorostyrene), as well as copolymers of styrene and p-methylstyrene, copolymers of styrene and p-tert-butylstyrene, and copolymers of styrene and divinylbenzene.

The invention is described in more detail with reference to the following Examples, which, however, are not intended to restrict the scope of the invention.

### Example 1

### Production of 1-ethyl-2-methyl-4,5,6,7-tetrahydroindenyltitanium trimethoxide:

A production scheme for 1-ethyl-2-methyl-4,5,6,7-tetrahydroindenyltitanium trimethoxide is mentioned below.

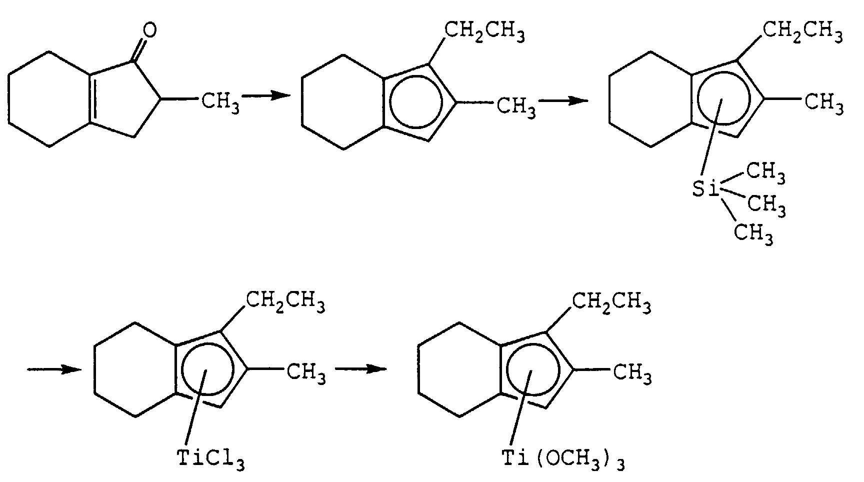

### (1) Production of 1-ethyl-2-methyl-4,5,6,7-tetrahydroindene:

Ethyllithium (at least 1 equivalent) was added to a solution of 6.65 g of 2-methyl-4,5,6,7-tetrahydroind-1-one in 200 ml of tetrahydrofuran, and stirred for 7 hours. Water was gradually added thereto to stop the reaction. The reaction mixture was purified through silica gel column chromatography to obtain a crude product of 1-ethyl-2-methyl-4,5,6,7-tetrahydroindene.

### (2) Production of 1-ethyl-2-methyl-4,5,6,7-tetrahydroindenyltrimethylsilane:

N-butyllithium (1.3 equivalents) was added to 3.99 g of the crude product, which had been prepared in the previous step (1), in 50 ml of hexane, and stirred overnight. The solution part was removed, and the remaining solid was isolated. To the solid, added were tetrahydrofuran (30 ml) and trimethylsilyl chloride (1.3 equivalents) in that order. This was stirred overnight, and a crude product of 1-ethyl-2-methyl-4,5,6,7-tetrahydroindenyltrimethylsilane was obtained.

### (3) Production of 1-ethyl-2-methyl-4,5,6,7-tetrahydroindenyltitanium trichloride:

2 g of the crude product having been prepared in the previous step (2) was added to a solution of titanium tetrachloride (1.1 equivalents) in methylene chloride (40 ml), and the reaction mixture was stirred overnight. The solvent was removed, and 1-ethyl-2-methyl-4,5,6,7-tetrahydroindenyltitanium trichloride was obtained.

### (4) Production of 1-ethyl-2-methyl-4,5,6,7-tetrahydroindenyltitanium trimethoxide:

Methanol (5 equivalents) and triethylamine (5 equivalents) were added to a solution in toluene (80 ml) of 2 g of the titanium compound having been prepared in the previous step (3), and the reaction mixture was stirred overnight. The solvent was removed, and the intended product, 1-ethyl-2-methyl-4,5,6,7-tetrahydroindenyltitanium trimethoxide was obtained.

The product was identified through ¹H-NMR and elementary analysis.

### ¹H-NMR (standard substance: tetramethylsilane, solvent: heavy chloroform):

1.08 ppm (t), 1.75 ppm (m), 2.12 ppm (s), 2.3 - 2.6 ppm (m), 4.08 ppm (s), 5.68 ppm (s).

| Elementary analysis: | | |
|---|---|---|
| Theoretical: | C 59.8 %, | H 8.4 % |
| Measured: | C 59.1 %, | H 8.4 % |

### Example 2

### Polymerization of styrene:

17.04 ml of toluene, 0.5 ml of a solution in toluene of triisobutylaluminium (2.0 mols/liter), 2.06 ml of a solution in toluene of methylaluminoxane (1.46 mols/liter), and 0.4 ml of a solution in toluene of 1-ethyl-2-methyl-4,5,6,7-tetrahydroindenyltitanium trimethoxide prepared in Example 1 (100 mmols/liter) were put into a 50-ml container, with nitrogen being introduced thereinto. This is referred to as a mixed catalyst.

In a 30-ml glass flask, 5 ml of styrene was mixed with 0.005 ml of a solution in toluene of triisobutylaluminium (0.5 mols/liter) in a nitrogen atmosphere. This glass flask was set in an oil bath at 60°C, to which was added 0.0315 ml of the mixed catalyst. The monomer was polymerized at 60°C for 1 hour in that condition. Then, the glass flask was taken out of the oil bath, and its content was processed with methanol. The polymer produced was taken out, washed with methanol, and then dried. Thus was obtained 1.497 g of syndiotactic polystyrene (SPS). The catalyst activity in the process was 499 (kg/g Ti). SPS obtained had a weight-average molecular weight of 615,000, and a melting point of 269.3°C. As having such a high melting point, the polymer obtained herein was identified as SPS with high syndiotacticity.

### Comparative Example 1

### Production of 1,3-dimethylhexahydroazulenyltitanium trimethoxide:

### (1) Production of 1,3-dimethylhexahydroazulene:

3-Methyl-4,5,6,7,8-pentahydro-2H-azulen-1-one (11.8 g, 72.4 mmols) was dissolved in tetrahydrofuran (150 ml), to which was gradually added a one-mol solution in ether of methyllithium (72.4 ml, 72.4 mmols) at -78°C, and then stirred for about 12 hours. Water was added thereto, and the organic layer was separated. The remaining aqueous phase was extracted with hexane (150 ml). The organic layers were combined, and dried with anhydrous magnesium sulfate. To this was added a small amount (3 spatulas) of iodine, and left as it was for 3 days. Then, this was washed with an aqueous solution of sodium sulfite, and the organic layer was dried with anhydrous magnesium sulfate. The solvent was evaporated away under reduced pressure, and the resulting residue was purified through silica gel column chromatography (eluent solvent: hexane) to obtain the product. The product weighed 6.0 g, and its yield was 50 %.

### (2) Production of 1,3-dimethylhexahydroazulenyltitanium trichloride:

1,3-Dimethylhexahydroazulene having been prepared in the previous step (1) (6.0 g, 36.2 mmols) was dissolved in ether (100 ml), to which was gradually added a 1.56-mol solution in hexane of n-butyllithium (22.3 ml, 36.2 mmols) at -78°C. This was heated up to room temperature, and then stirred for 12 hours. Then, the solvent was removed, and the lithium salt thus precipitated was washed with hexane. This was dissolved in tetrahydrofuran (100 ml), to which was added trimethylsilyl chloride (3.9 g, 36.2 mmols) at room temperature, and stirred for about 12 hours. The reaction solvent was evaporated away under reduced pressure, and the residue was extracted with hexane to obtain a silylated product. A solution in toluene (50 ml) of the silylated product was added to a solution in toluene (100 ml) of titanium tetrachloride (5.7 g, 36.2 mmols), and stirred for about 12 hours. The reaction mixture was dried up under reduced pressure, and the solid precipitate was recrystallized from toluene to obtain the intended product which was a red solid. The product weighed 4.0 g, and its yield was 35.2 %.

The product was identified through ¹H-NMR.

### ¹H-NMR (standard substance: tetramethylsilane, solvent: heavy benzene):

5.99 ppm (s, 1H), 2.77 - 2.48 ppm (m, 4H), 1.93 ppm (s, 6H), 1.75 - 1.26 ppm (m, 4H), 0.92 - 0.79 ppm (m, 2H).

### (3) Production of 1,3-dimethylhexahydroazulenyltitanium trimethoxide:

1,3-Dimethylhexahydroazulenyltitanium trichloride (2.5 g, 7.93 mmols) having been prepared in the previous step (2) was dissolved in toluene (100 ml), to which were added dry methanol (8 ml) and triethylamine (28 ml). After having been stirred for about 12 hours, the reaction mixture was dried up under reduced pressure, and then extracted with hexane. The solvent, hexane was evaporated away under reduced pressure, and the resulting residue was recrystallized from hexane to obtain the intended product which was an yellow solid. The product weighed 1.20 g, and its yield was 50.1 %.

The product was identified through ¹H-NMR.

### ¹H-NMR (standard substance: tetramethylsilane, solvent: heavy chloroform):

5.76 ppm (s, 1H), 4.08 ppm (s, 9H), 2.66 - 2.55 ppm (m, 4H), 2.10 ppm (s, 6H), 2.03 - 1.8 ppm (m, 4H), 1.5 - 1.2 ppm (m, 2H).

### Comparative Example 2

### Polymerization of styrene:

7.94 ml of toluene, 0.25 ml (0.5 mmols) of a solution in toluene of triisobutylaluminium (2 mols/liter), 1.01 ml (1.5 mmols) of a solution in toluene of methylaluminoxane (1.49 mols/liter), and 0.4 ml (0.02 mmols) of a solution in toluene of 1,3-dimethylhexahydroazulenyltitanium trimethoxide prepared in Comparative Example 1 (50 mmols/liter) were put into a 50-ml Schlenk tube with stirring them and with nitrogen being introduced thereinto. This is referred to as a mixed catalyst.

5 ml of styrene and 0.005 ml (0.0025 mmols) of a solution in toluene of triisobutylaluminium (0.5 mols/liter) were put into a 30-ml ampoule in a nitrogen box. This ampoule was set in an oil bath at 60°C. After 10 minutes, 0.0313 ml of the mixed catalyst was added thereto. The monomer was polymerized under heat at 60°C for 1 hour in that condition. Then, the ampoule was taken out of the oil bath, and its content was cooled with methanol. The polymer produced was taken out, left in methanol overnight, and then dried in vacuum at 200°C for 2 hours.

The polymer weighed 1.02 g, and its yield was 340 (kg/g Ti). The polymer had weight-average molecular weight of 632,000, and its melting point was 267.0°C.

### Example 3

### Production of 1-trimethylsilylmethyl-2-methyl-4,5,6,7-tetrahydroindenyltitanium trimethoxide:

A production scheme for the compound is mentioned below.

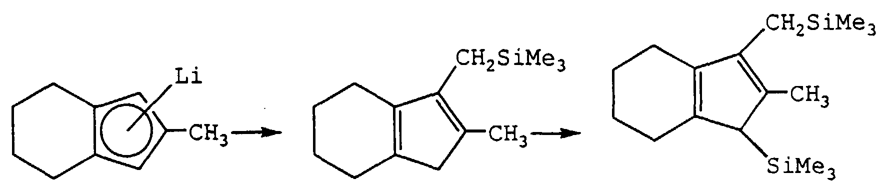

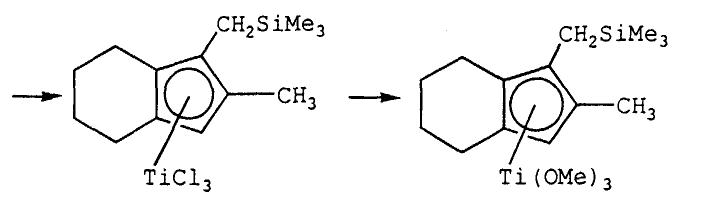

### (1) Production of 1-trimethylsilylmethyl-2-methyl-4,5,6,7-tetrahydroindene:

0.33 g (2.35 mmols) of 2-methyl-4,5,6,7-tetrahydroindenyllithium was dissolved in 10 ml of tetrahydrofuran, and cooled at 0°C. Next, 0.4 ml (2.7 mmols) of trimethylsilylmethane iodide (Me₃SiCH₂I) was added thereto, and stirred overnight. The reaction mixture was dried up under reduced pressure to obtain an yellow oil.

The oil was identified as 1-trimethylsilylmethyl-2-methyl-4,5,6,7-tetrahydroindene through ¹H-NMR.

### ¹H-NMR (tetramethylsilane standard, heavy chloroform solvent):

1.66 - 2.71 ppm (m, 12H), 1.85 ppm (s, 3H), 0.0 ppm (s, 9H).

### (2) Production of 1-trimethylsilylmethyl-2-methyl-3-trimethylsilyl-4,5,6,7-tetrahydroindene:

0.24 g (1.10 mmols) of 1-trimethylsilylmethyl-2-methyl-4,5,6,7-tetrahydroindene having been prepared in the previous step (1) was dissolved in 5 ml of hexane, and cooled at 0°C. Next, 0.9 ml (1.3 mmols) of n-butyllithium was added thereto, then heated up to room temperature, and stirred overnight. The reaction mixture was dried up under reduced pressure to obtain 0.19 g of a white solid. 0.1 g (0.4 mmols) of the solid was dissolved in 10 ml of tetrahydrofuran, and cooled at 0°C. Next, 0.1 ml (0.8 mmols) of trimethylsilyl chloride (Me₃SiCl) was added thereto, then heated up to room temperature, and stirred overnight. The reaction mixture was distilled under reduced pressure to obtain an yellow oil.

The oil was identified as 1-trimethylsilylmethyl-2-methyl-3-trimethylsilyl-4,5,6,7-tetrahydroindene through ¹H-NMR.

### ¹H-NMR (tetramethylsilane standard, heavy chloroform solvent):

1.4 - 2.7 ppm (m, 11H), 1.88 ppm (s, 3H), 0.0 ppm (s, 18H).

### (3) Production of 1-trimethylsilylmethyl-2-methyl-4,5,6,7-tetrahydroindenyltitanium trichloride:

0.04 ml (0.34 mmols) of titanium tetrachloride was dissolved in 8 ml of methylene chloride, and cooled at -20°C. A solution in methylene chloride (5 ml) of 0.09 g (0.31 mmols) of 1-trimethylsilylmethyl-2-methyl-3-trimethylsilyl-4,5,6,7-tetrahydroindene having been prepared in the previous step (2) was added thereto, then heated up to room temperature, and stirred overnight. The reaction mixture was filtered, and the resulting filtrate was concentrated under reduced pressure to obtain 1-trimethylsilylmethyl-2-methyl-4,5,6,7-tetrahydroindenyltitanium trichloride.

The product was identified as 1-trimethylsilylmethyl-2-methyl-4,5,6,7-tetrahydroindenyltitanium trichloride through ¹H-NMR.

### ¹H-NMR (tetramethylsilane standard, heavy chloroform solvent):

6.52 ppm (s, 1H), 2.46ppm (s, 3H), 2.37 ppm (s, 2H), 1.4-3.5 ppm (m, 8H), 0.0 ppm (s, 9H).

### (4) Production of 1-trimethylsilylmethyl-2-methyl-4,5,6,7-tetrahydroindenyltitanium trimethoxide:

2.5 g (6.5 mmols) of 1-trimethylsilylmethyl-2-methyl-4,5,6,7-tetrahydroindenyltitanium trichloride having been prepared in the previous step (3) was dissolved in 50 ml of toluene, and cooled at -78°C, to which were added 2.1 ml (65 mmols) of dry ethanol and 9.0 ml (65 mmols) of triethylamine, then heated up to room temperature, and stirred overnight. The reaction mixture was dried up under reduced pressure, and the resulting residue was purified through distillation under reduced pressure (115 to 123°C, 250 x 10⁻³ Torr) to obtain an yellow liquid.

The yellow liquid was identified as 1-trimethylsilylmethyl-2-methyl-4,5,6,7-tetrahydroindenyltitanium trimethoxide through ¹H-NMR.

### ¹H-NMR (tetramethylsilane standard, heavy chloroform solvent):

5.64 ppm (s, 1H), 4.06 ppm (s, 9H), 2.02 ppm (s, 3H), 1.89 ppm (s, 2H), 1.6 - 2.8 ppm (m, 8H), 0.0 ppm (s, 9H).

### Example 4

### Polymerization of styrene:

19.3 ml of toluene, 0.63 ml of a solution in toluene of triisobutylaluminium (2.0 mols/liter), 3.82 ml of a solution in toluene of methylaluminoxane (1.44 mols/liter), and 1.25 ml of a solution in toluene of 1-trimethylsilylmethyl-2-methyl-4,5,6,7-tetrahydroindenyltitanium trimethoxide prepared in Example 3 (50 mmols/liter) were put into a 50-ml container, with nitrogen being introduced thereinto. This is referred to as a mixed catalyst.

In a 30-ml glass flask, 5 ml of styrene was mixed with 0.005 ml of a solution in toluene of triisobutylaluminium (0.5 mols/liter) in a nitrogen atmosphere. This glass flask was set in an oil bath at 60°C, to which was added 0.0315 ml of the mixed catalyst. The monomer was polymerized at 60°C for 30 minutes in that condition. Then, the glass flask was taken out of the oil bath, and the polymerization mixture therein was processed with methanol. The polymer produced was taken out, washed with methanol, and then dried. The yield of the polymer was 0.904 g. The catalyst activity in the process was 301 (kg/g Ti). The polymer had a melting point of 269.2°C. As having such a high melting point, the polymer obtained herein was identified as SPS with high syndiotacticity.

### Comparative Example 3

Styrene was polymerized in the same manner as in Example 4, except that the titanium complex was replaced with pentamethylcyclopentadienyltitanium trimethoxide. The yield of the polymer was 0.640 g, and the catalyst activity in the process was 213 (kg/g Ti).

As has been described in detail hereinabove, the polymerization catalyst comprising the transition metal compound of the invention has high activity, and is favorably used in polymerization of ethylenic unsaturated bond-having compounds. In particular, homopolymerizing or copolymerizing styrenic monomers in the presence of the polymerization catalyst gives styrenic polymers with high syndiotacticity, and the residual metal content of the polymers is small. In the process, the catalyst exhibits high activity and functions efficiently.

While the invention has been described in detail and with reference to specific embodiments thereof, it will be apparent to one skilled in the art that various changes and modifications can be made therein without departing from the spirit and scope thereof.

## Claims

1. A transition metal compound of a general formula (I):
RMXₐ₋₁L_{b} (I)
wherein R represents a π ligand, and this is a substituted indenyl or fluorenyl group in which at least one substituent is an alkyl group having at least 2 carbon atoms, or is a substituted, condensed polycyclic cyclopentadienyl group in which at least one substituent is an alkyl group having at least 2 carbon atoms and at least one poly-membered ring condensed with the substituted cyclopentadienyl group is a saturated ring;
M represents a transition metal;
X represents a σ ligand, and plural X's may be the same or different, and may be bonded to each other via any group therebetween;
L represents a Lewis base, and plural L's, if any, may be the same or different;
a represents the valency of M; and
b represents 0, 1 or 2.

2. A transition metal compound of a general formula (I):
RMXₐ₋₁L_{b} (I)
wherein R represents a π ligand, and this is a substituted indenyl or fluorenyl group in which at least one substituent is an alkyl group having at least 2 carbon atoms;
M represents a transition metal;
X represents a σ ligand, and plural X's may be the same or different, and may be bonded to each other via any group therebetween;
L represents a Lewis base, and plural L's, if any, may be the same or different;
a represents the valency of M; and
b represents 0, 1 or 2.

3. A polymerization catalyst for ethylenic unsaturated bond-having compounds, which comprises (A) a transition metal compound of claim 1, and (B) at least one component selected from the following (a), (b) and (c):
(a) an oxygen-containing compound,
(b) a compound capable of reacting with the transition metal compound to form an ionic complex, and
(c) clay, a clay mineral or an ion-exchanging phyllo-structured compound.

4. A polymerization catalyst for ethylenic unsaturated bond-having compounds, which comprises (A) a transition metal compound of claim 1, (B) at least one component selected from the following (a), (b) and (c), and (C) an alkylating agent:
(a) an oxygen-containing compound,
(b) a compound capable of reacting with the transition metal compound to form an ionic complex, and
(c) clay, a clay mineral or an ion-exchanging phyllo-structured compound.

5. A polymerization catalyst for styrenic polymers, which comprises (A) a transition metal compound of claim 1, and (B) at least one component selected from the following (a) and (b):
(a) an oxygen-containing compound, and
(b) a compound capable of reacting with the transition metal compound to form an ionic complex.

6. A polymerization catalyst for styrenic polymers, which comprises (A) a transition metal compound of claim 1, (B) at least one component selected from the following (a) and (b), and (C) an alkylating agent:
(a) an oxygen-containing compound, and
(b) a compound capable of reacting with the transition metal compound to form an ionic complex.

7. The polymerization catalyst as claimed in any one of claims 3 to 6, wherein R in formula (I) for the transition metal compound of claim 1 is any of the following general formulae (II) to (VII): 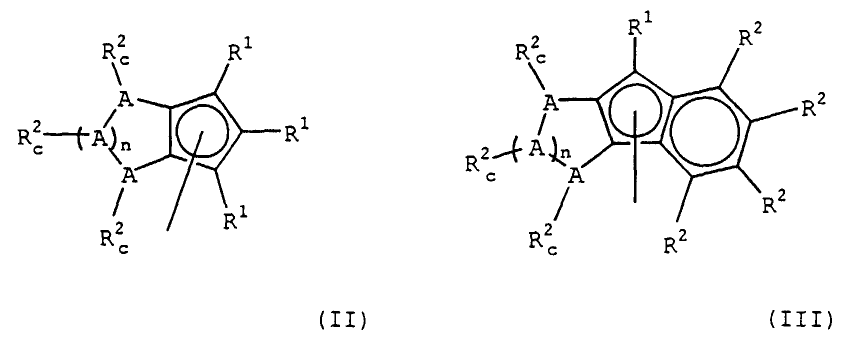 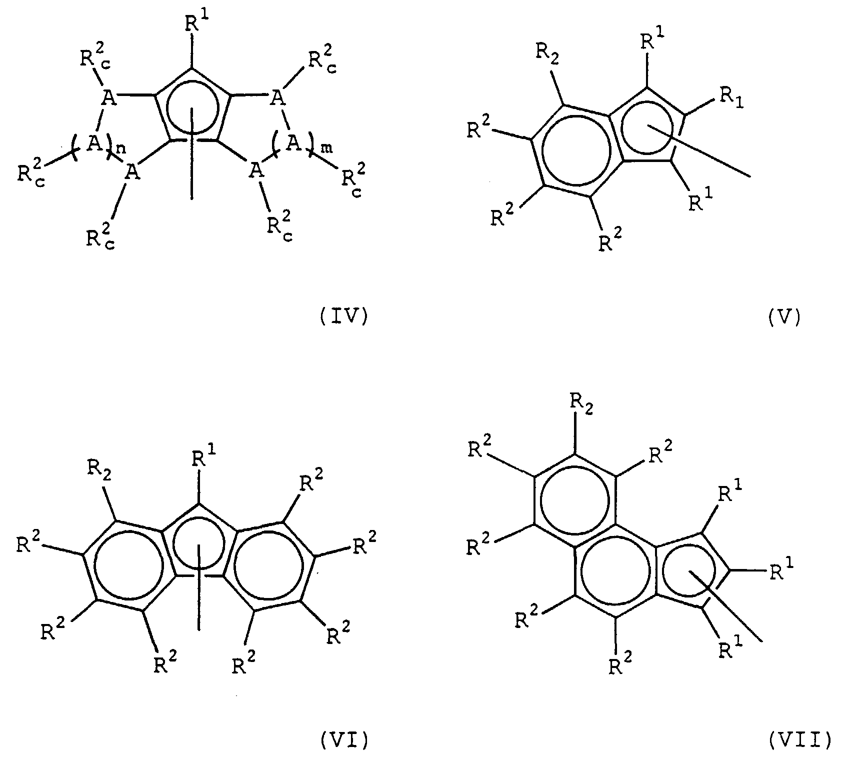
where A represents an element of Group 13, 14, 15 or 16, and plural A's may be the same or different;
R¹ and R² each represent a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, a carboxyl group, or an alkylsilyl or alkylsilylalkyl group having from 3 to 30 carbon atoms, and R¹ and R² may be the same or different, and may be bonded to each other to form a cyclic structure, but at least one R¹ is an alkyl group having at least 2 carbon atoms;
c represents 1 or 2; and
n and m each represent an integer of 1 or more.

8. The polymerization catalyst as claimed in any one of claims 3 to 6, wherein R in formula (I) for the transition metal compound of claim 1 is any of 4,5,6,7-tetrahydroindenyl groups.

9. The polymerization catalyst as claimed in any one of claims 3 to 6, wherein R in formula (I) for the transition metal compound of claim 1 is selected from a 1-ethyl-4,5,6,7-tetrahydroindenyl group, a 1-ethyl-2-methyl-4,5,6,7-tetrahydroindenyl group and a 2-ethyl-4,5,6,7-tetrahydroindenyl group.

10. A method for producing polymers of ethylenic unsaturated bond-having compounds, in which is used the polymerization catalyst of claim 3 or 4.

11. A method for producing styrenic polymers, which comprises polymerizing styrenic compounds, or styrenic compounds and other polymerizable unsaturated compounds, with using the polymerization catalyst of claim 5 or 6.

12. The method for producing styrenic polymers as claimed in claim 11, wherein the styrenic polymers produced have high syndiotacticity.

13. A transition metal compound of a general formula (VIII):
R'M'Xₐ₋₁L_{b} (VIII)
wherein R' represents a substituted cyclopentadienyl group, a substituted indenyl group or a substituted fluorenyl group, which has at least one substituent R³ of the following general formula (IX) and in which the other substituents R⁴'s are any of a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, a carboxyl group and an alkylsilyl group having from 3 to 30 carbon atoms, and plural R⁴'s may be the same or different; and, irrespective of R³ and R⁴, the substituents on R' may be bonded to each other to form a cyclic compound;
M' represents a transition metal of Group 4 to Group 10;
X represents a σ ligand, and plural X's may be the same or different, and may be bonded to each other via any group therebetween;
L represents a Lewis base, and plural L's, if any, may be the same or different;
a represents the valency of M; and
b represents 0, 1 or 2, 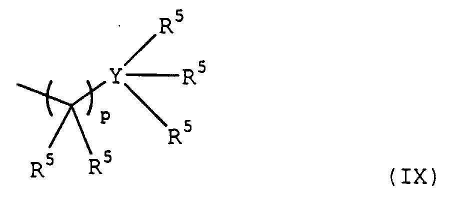
where Y represents a silicon atom, a germanium atom, or a tin atom;
p represents an integer of 1 or more;
R⁵ represents a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, a carboxyl group, or an alkylsilyl group having from 3 to 30 carbon atoms, and plural R⁵'s may be the same or different.

14. A polymerization catalyst for ethylenic unsaturated bond-having compounds, which comprises (A') at least one transition metal compound of claim 13, and (B) at least one component selected from the following (a), (b) and (c):
(a) an oxygen-containing compound,
(b) a compound capable of reacting with the transition metal compound to form an ionic complex, and
(c) clay, a clay mineral or an ion-exchanging phyllo-structured compound.

15. A polymerization catalyst for ethylenic unsaturated bond-having compounds, which comprises (A') at least one transition metal compound of claim 13, (B) at least one component selected from the following (a), (b) and (c), and (C) an alkylating agent:
(a) an oxygen-containing compound,
(b) a compound capable of reacting with the transition metal compound to form an ionic complex, and
(c) clay, a clay mineral or an ion-exchanging phyllo-structured compound.

16. A polymerization catalyst for styrenic polymers, which comprises (A') at least one transition metal compound of claim 13, and (B) at least one component selected from the following (a) and (b):
(a) an oxygen-containing compound, and
(b) a compound capable of reacting with the transition metal compound to form an ionic complex.

17. A polymerization catalyst for styrenic polymers, which comprises (A') at least one transition metal compound of claim 13, (B) at least one component selected from the following (a) and (b), and (C) an alkylating agent:
(a) an oxygen-containing compound, and
(b) a compound capable of reacting with the transition metal compound to form an ionic complex.

18. The polymerization catalyst as claimed in any one of claims 14 to 17, wherein R' in the transition metal compound of claim 13 is a group of a general formula (X): 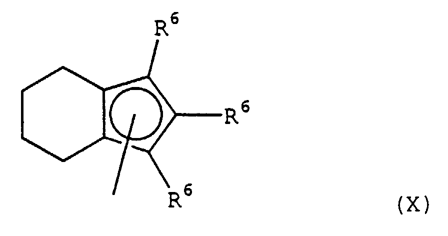 wherein at least one R⁶ is an alkylsilylalkyl group having a structure of the following general formula (XI), and the other R⁶'s are any of a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, a carboxyl group and an alkylsilyl group having from 3 to 30 carbon atoms, and plural R⁶'s may be the same or different, 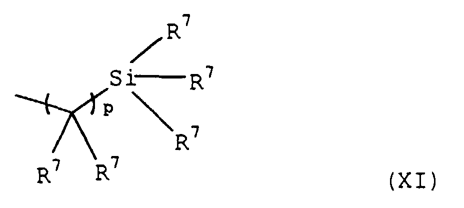
where p represents an integer of 1 or more;
R⁷ represents a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, a carboxyl group, or an alkylsilyl group having from 3 to 30 carbon atoms, and plural R⁷'s may be the same or different.

19. The polymerization catalyst as claimed in any one of claims 14 to 17, wherein R' in the transition metal compound of claim 13 is a group of a general formula (XII):

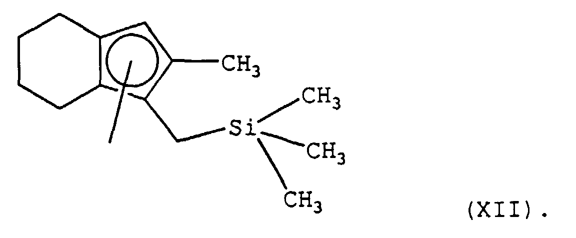

20. A method for producing polymers of ethylenic unsaturated bond-having compounds, in which is used the polymerization catalyst of claim 14 or 15.

21. A method for producing styrenic polymers, which comprises polymerizing styrenic compounds, or styrenic compounds and other polymerizable unsaturated compounds, with using the polymerization catalyst of claim 16 or 17.

22. The method for producing styrenic polymers of as claimed in claim 21, wherein the styrenic polymers produced have high syndiotacticity.
